Europäisches Patentamt

European Patent Office

Office européen des brevets

(11) Publication number: 0 336 579 A2

## (12) EUROPEAN PATENT APPLICATION

(21) Application number: 89302576.7

(51) Int. Cl.4: G06F 15/40

(22) Date of filing: 16.03.89

(30) Priority: 08.04.88 US 179191

(43) Date of publication of application:
11.10.89 Bulletin 89/41

(84) Designated Contracting States:
BE CH DE FR GB IT LI NL SE

(71) Applicant: International Business Machines
Corporation
Old Orchard Road
Armonk, N.Y. 10504(US)

(72) Inventor: Chang, Philip Yen-Tang
6221 Ledge Mountain Drive
Austin Texas 78731(US)
Inventor: Engles, Robert William
6899 Hampton Drive
San Jose California 95120(US)
Inventor: Obermann, David Francis
3308 Perry Lane
Austin Texas 78731(US)
Inventor: Trumble, Mary Kathleen
1411 Gracy Farms Lane, No. 89
Austin Texas 78758(US)

(74) Representative: Grant, Iain Murray
IBM United Kingdom Limited Intellectual
Property Department Hursley Park
Winchester Hampshire SO21 2JN(GB)

(54) Relational databases.

(57) A relational database system having mixed data comprises means for selectively designating a column in a database table as being for single byte character set data only. Preferably, the user application can specify the subtype of character data within a column as the column is created or added by specifying FOR SBCS or FOR MIXED in either the CREATE TABLE statement or the ALTER TABLE statement. This can be done by specifying the subtype of the character data types including CHAR, VARCHAR, and LONG VARCHAR.

Along with specifying the subtype as either for single byte data or for mixed data, means are preferably provided for specifying the codepage to be used for the column of the table in the database. The subtype of the character can then be recorded in terms of the code page attributes of the character data type as stored in the database system catalogs. This encoding scheme provides an efficient method of determining whether a column is only for single byte character set data or mixed data, and at the same time knowing the correct codepage that is to be used for that column simply by querying the code page columns within the database system catalogs.

## RELATIONAL DATABASES

This invention relates to computerised databases and, more particularly, relational databases.

A database is used to store vast quantities of data for future retrieval upon request by a user. A user can be either an application program or an end user interacting with the database system through an input device. Related groups of data are commonly referred to as files of data, or tables, as commonly used in relational databases. The rows of data in a table are referred to as logical records, and the columns of data are referred to as fields. In a relational database system, the user perceives the data only as tables, and not in any other organisational form, e.g. a hierarchical structure of data.

These database systems typically include a computer program, commonly referred to as a database manager, for storing, editing, updating, inserting, deleting, and retrieving data in response to various commands entered through a user interface. A database manager handles all requests from users to the database to perform the various functions as listed above.

Specifically, with respect to retrieval of data, numerous computer languages were devised for formulating search commands or "queries" to which the database manager was responsive in providing the requested data. These queries were basically search instructions encoded so as to cause a computer and associated database manager to carry out the desired search.

Several problems have been associated with these languages for formulating database queries. First, many of the query languages differed from conventional programming languages. The database user with programming experience was thus required to learn an entirely new set of commands just to get meaningful data out of the database. Users without such experience, such as many terminal operators who are also without computer experience of any kind, were thus forced to learn a form of computer programming just to interact with the database. Moreover, such query languages required knowledge of highly complex syntax and semantics rules, thereby further limiting the numbers who could successfully retrieve data to only a highly and expensively trained few. This, in turn, adversely affected the utility of such computer systems and seriously inhibited their use by a widespread number of individuals.

A structured query language is an interactive query language for end-users to utilise to interface with the database manager to retrieve information, and a database programming language which can be embedded in an application program to access the data in the database through the database manager. SQL is an easy way to specify the type of information needed.

A representative of such query language is the Standard Query Language or "SQL" detailed in the Draft Proposal, ANA Database Language SQL, Standard X3.135-1986, American National Standard Institute, Inc., 1430 Broadway, New York, New York 10018. Detailed discussion of SQL is also set forth in "IBM Database 2 SQL Reference" Document Number SC26-4346-3, IBM Corporation, both of which are incorporated herein by reference.

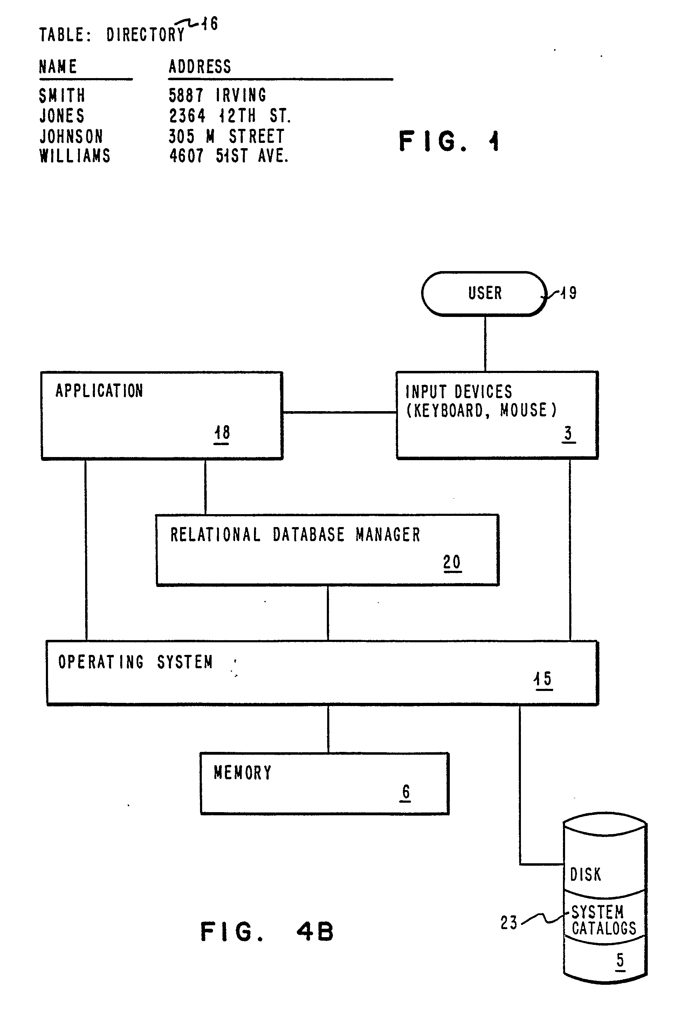

For example, for a user to create a table 16 having rows and columns of data containing names and addresses as shown in Fig. 1, the user would issue the CREATE TABLE statement to define the database as follows:

```
CREATE TABLE DIRECTORY

          (NAME          CHAR(20),

           ADDRESS       CHAR(50))
```

The CREATE TABLE statement is an example of a SQL data definition statement. Each CREATE TABLE statement gives the name of the table to be created, the names of its columns, and the data types of those columns. The CREATE TABLE statement is an executable statement, i.e., if the CREATE TABLE statement is entered at a terminal by a user, the system will build the table at that time. Initially, the table will be empty, i.e., there will not be any data rows. However, by using the SQL INSERT statement, the user can create the table as shown in Fig. 1. Having created a table, and inserted records into it, the user can retrieve data from the table through the SQL data manipulation statements.

Not only can a table be created at any time by a user through the CREATE TABLE statement shown above, but the existing table can also be altered at any time by the user by adding columns through the ALTER TABLE statement. For example, if the table 16 in FIG. 1 were to be altered by adding a column for "city and state", the ALTER TABLE statement may appear as follows:

```
ALTER TABLE DIRECTORY
ADD CITY_STATE CHAR(20)
```

The above statement adds the column "CITY_STATE" to the table "DIRECTORY". After the column name is specified, the data type of that column is specified. Some data types are as follows. The last three categories, CHAR, VARCHAR, and LONG VARCHAR will be referred to herein as character data types.

| | |
|---|---|
| INTEGER | signed fullword binary integer (31 bits precision) |
| SMALLINT | signed halfword binary integer (15 bits precision) |
| DECIMAL | signed packed decimal number of p digits precision, with assumed decimal point q digits from the right |
| FLOAT | signed double precision floating point number |
| CHAR(n) | fixed length character string of length n characters |
| VARCHAR(n) | varying length character string of maximum length n characters not exceeding 4,000 bytes |
| LONG VARCHAR | varying length character string not exceeding 32,700 bytes |

For additional information in this area, the following reference, which is herein incorporated by reference, is suggested. C. J. Date, An Introduction to Database Systems, Volume 1, Fourth Edition, Addison-Wesley Publishing Company, Inc., 1986.

When a user inserts the data as shown in Fig. 1, the processing system does not see the data as actually shown, but rather as a string of bits of 1's and 0's which are interpreted in various fashions, depending upon the type of the data, by the processing system. If the data is text or character, the processing system interprets the string in fixed units, where each unit represents a character, numeral, or some other text graphic. These units are commonly called code points, and always have a specific bit width, such as 8 bits (1 byte). A single byte code point strategy, i.e. encoding scheme, allows a possible 256 different code points with the various combinations of eight 1's and 0's. With these 256 different code points, one can express up to 256 different characters, numerals, symbols, etc.

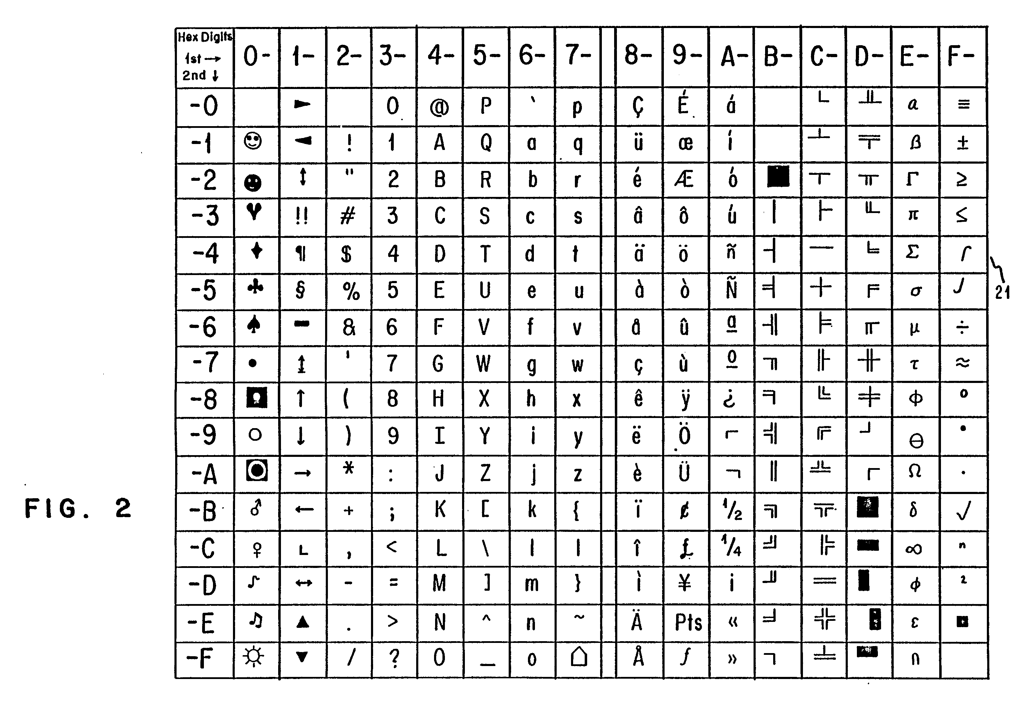

Each group of 256 code points is referred to as a code page. One code page is sufficient to express most of the characters and numerals in the English language along with some additional symbols that are commonly used. An example of a code page 21 is shown in Fig. 2.

The above described single byte code page is quite sufficient to represent the English language. However, since the Japanese language contains over 6,000 symbols, the above encoding scheme can not be used to represent all of the different symbols.

Therefore, a "richer" encoding scheme is required, such as that provided in a version of the Japanese Industrial Standard, called Shifted-Jis.

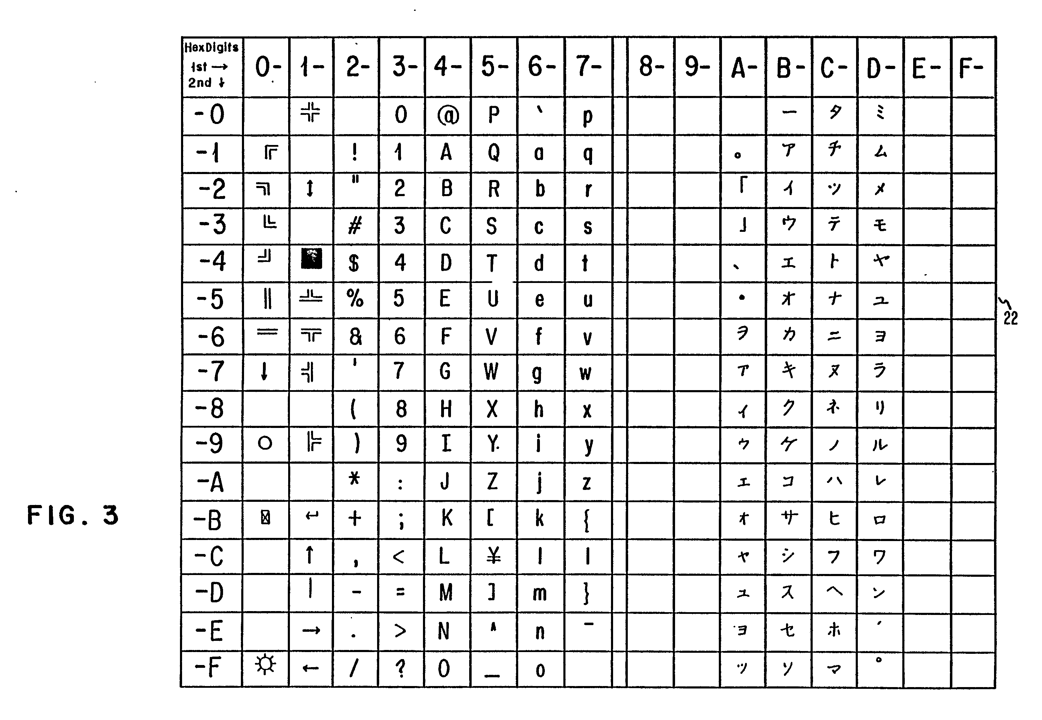

Shifted-Jis standards describe the Japanese character set and code pages for the greater than 6,000 graphical symbols used in the written Japanese language. The Shifted-Jis standards are further described in the publications titled "IBM Registry Graphics Characters Sets and Code Pages" document number C-H 3-3220-050, and "IBM Japanese Graphic Character Set, KANJI" document number C-H 3-3220-024. An example of a code page 22 for the Japanese language is shown in Fig. 3.

Referring to Fig. 3, the hexadecimal codes 0x00 to 0x7E represent single byte symbols such as numerals and the English alphabet in upper and lower cases. Hexadecimal codes 0xA1 to 0xDF represent single byte Japanese symbols known as half size Katakana. Hexadecimal codes 0x81 to 0x9F, and 0xE0 to 0xFC can be thought of as "introducing bytes" that access some 11,000-12,000 Japanese symbols. The introducing bytes are the first bytes of a double byte sequence. Therefore, for these 11,000 or so Japanese symbols, two bytes are needed to identify a symbol. This defines a double byte encoding scheme.

The significance of the code page as shown in Fig. 3 for the different Japanese symbols can be further appreciated with some additional background information on the Japanese language.

There are three types of Japanese characters that are used in the Japanese language. They are Kanji, Hiragana, and Katakana. Kanji characters are ideographic characters. A single Kanji character or a list of Kanji characters may represent a word. There are about 7,000 Kanji characters defined for computer usage.

Hiragana and Katakana characters are phonetic characters. Each of them represents a sound. There are approximately 50 Hiragana and approximately 50 Katakana characters. The Hiragana characters are used to connect Kanji characters, e.g., as word endings such as -ing. Katakana characters are used for words which do not have a Kanji equivalent, e.g., words foreign to the Japanese language such as some English words. These words would then be represented by the Katakana characters phonetically, i.e., based on how the foreign word would be pronounced. As a general rule, Hiragana is used to express grammatical word endings, and Katakana is used for special meanings such as emphasizing a word or expressing a foreign term. A typical Japanese written sentence is a mixture of Kanji, Hiragana, and Katakana characters.

As described above in reference to Fig. 3, the Katakana characters were single byte characters 0xA1 to 0xDF, while the Hiragana and Kanji characters were double byte characters. It is apparent that it would be common for the Japanese to mix single and double byte characters within an expression.

For example, a Kanji character can have more than one pronunciation depending on its context within the expression. However, there is only one pronunciation for each Hiragana character and Katakana character. Thus a Japanese word can be represented as a Kanji character (double byte character), if it exists, or its pronunciation written in Hiragana (double byte character) or Katakana (single byte character).

In addition, the Roman alphabet is also used in Japanese, as shown by hexadecimal codes 0x41 to 0x7A, Fig. 3. Romaji, which consists of the 26 phonetic symbols, are used to write English and to write pronunciations of Japanese words. Romaji is used primarily in technical and professional environments to construct sounds for which Japanese characters are not available. A list of Romaji characters (single byte) uniquely represents a Japanese pronunciation of a Japanese word otherwise represented as a double byte character. The Japanese written sentence is a mixture of Kanji, Hiragana, Katakana, Romaji, numbers and other characters. These include a mixture of both single byte and double byte characters.

Likewise, columns in a relational database would also include a mixture of single and double byte characters if the relational database supported the Japanese language.

Current SQL-based relational data base products have an installation option which specifies whether mixed (double byte and single byte) data must be processed. If this option is specified, character data is treated as mixed. As such, if the mixed option is specified, all the data in all the fields are treated as mixed data, even though some fields may contain only single byte data. In environments such as in the Japanese language that require double byte character set data, all characters must be assumed to be mixed double byte character set data and single byte character set data. More complex algorithms are needed to process mixed data than for single byte data. As a result, the processing of all columns of data in a relational database has decreased in performance if mixed data has been specified.

It is an object of this invention to increase performance in the processing of data in a relational database when there is mixed single and double byte data.

In accordance with a first aspect of the invention, there is provided a relational database system having mixed data of single byte character set data and double byte character set data, the system comprising a plurality of columns in at least one table of the relational database system; and means for selectively designating a column in the table as being for single byte character set data only.

In accordance with a second aspect of the invention, there is provided a relational database system comprising a plurality of columns in a table of data; means for specifying a plurality of character data types for each of the plurality of columns; and means for specifying a plurality of subtypes of the character data types.

In accordance with a third aspect of the invention, there is provided a method for processing a table of mixed data in a relational database system, the method comprising tagging a column of data as being for single byte character set data only.

The invention is based on the recognition that, previously, there has not been a way to specify that certain columns in a table will be used only for single byte character set data, and that by so specifying such columns simpler algorithms can be applied to these columns.

In a specific embodiment of this invention described later, extensions are provided to the existing SQL language by adding an optional parameter to the CREATE TABLE statement and the ALTER TABLE statement for specifying a subtype of the character type data on a per column basis. The subtype indicates whether the data will contain mixed or pure single-byte data. In the preferred embodiment, if the user specifies the column for single byte data, the user can further specify the code page for the single byte character set data. If the user specifies that the column is for mixed data, the user can further specify the code page to be used for the single byte character set data, and the code page to be used for the double byte character set data.

Thus, the encoding scheme used in the specific embodiment described later serves a dual purpose. By simply checking whether the single byte code page and the double byte code page attributes of a character column in the database system catalogs are zero or non-zero, the system or an application can determine whether the character column is designated for mixed data or for pure single-byte data, and at the same

4

time determine the code page(s) to be used for that column. The flag which indicates which character subtype is contained in the column is the code page itself, and can be used to do special translation, etc., for the column.

For example, if the single byte code page attribute is a non-zero value and the double byte code page attribute is a zero, the column has been specified for only single byte character set data. In addition, the value of the non-zero single byte code page attribute would be the value which specified a specific code page. If the single byte code page and the double byte code page attributes are both non-zero, the column would contain mixed data having both double byte character set data and single byte character set data. In addition, the non-zero values would specify the code page to be used for the single byte data and the code page to be used for the double byte data.

The database product and the user applications are thus able to know how to treat the data in a character column with respect to data handling algorithms such as truncation, substring, etc. If the column is for only single byte character set data, the handling of the data may be greatly simplified. Without this invention, the "worst case" of mixed data must be assumed. Additionally, the specification of separate code pages for columns will allow different collating sequences to be applied on a column basis.

The present invention will be described further by way of example with reference to an embodiment thereof as illustrated in the accompanying drawings in which:-

Fig. 1 illustrates a sample table of data in a relational database.

Fig. 2 illustrates a sample code page used for single byte data as in the English language.

Fig. 3 illustrates a sample code page for the Japanese language.

Fig. 4A and Fig. 4B are generalised views of the relational database system of this embodiment.

Fig. 5A illustrates the CREATE TABLE statement for specifying a subtype of the character data type for designating a column as having mixed data or single byte data.

Fig. 5B illustrates the ALTER TABLE statement for specifying a subtype of the character data type for designating a column as having mixed data or single byte data.

Fig. 6 is a block diagram of the components of a relational database manager of the embodiment.

Fig. 7 is a generalised flow chart for explaining the operation of the embodiment.

Fig. 8 is a block diagram showing the components of the relational data services of the embodiment.

Fig. 9 is a diagram of the SYSTABLES in the database system catalogs of the embodiment.

Fig. 10A, 10B, 10C is a diagram of the SYSCOLUMNS in the database system catalogs.

Fig. 11 is a flow chart of the SQL parser phase of the operation of the SQL compiler of the embodiment.

Fig. 12 is a flow chart of the code generation phase of the operation of the SQL compiler.

Fig. 13A, 13B, 13C, 13C, 13D, 13E are detailed flow diagrams illustrating aspects of the operation of the embodiment.

Fig. 14 is a flow diagram of the execution of the generated code and the packed description in the embodiment.

Fig. 15 is a flow diagram of updating the SQLDA with the code page in the embodiment.

Fig. 16A is a flow diagram of a truncation algorithm for mixed data.

Fig. 16B is a flow diagram of a truncation algorithm for single byte data.

Fig. 17 is a flow diagram of a substring algorithm for mixed data.

Fig. 18 illustrates the encoding scheme in SQLDATA and SQLIND used in the embodiment.

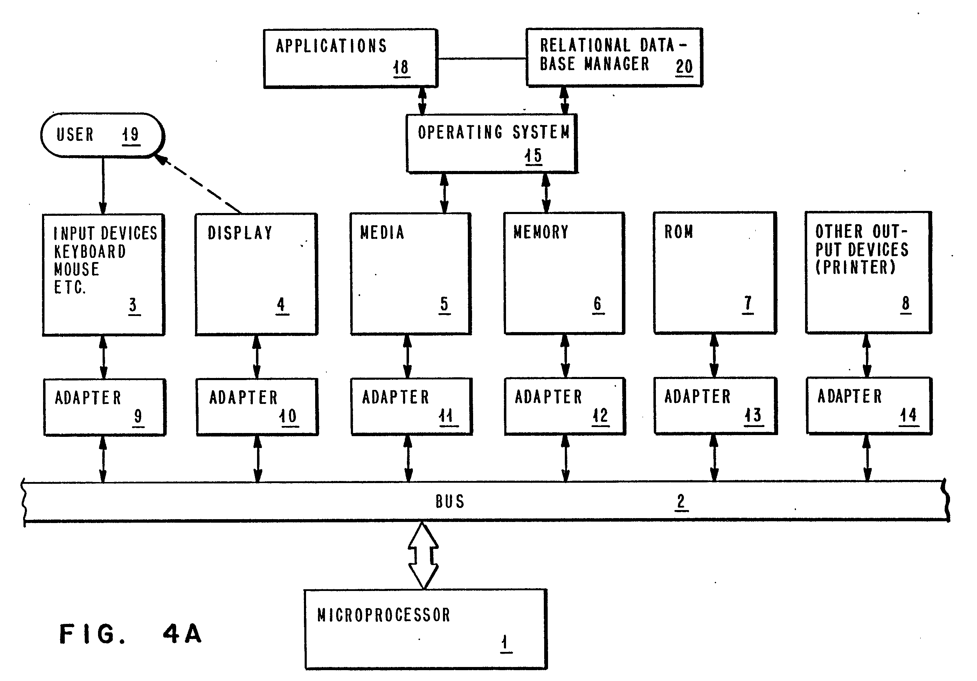

Beginning with reference to the block diagram of Fig. 4A and Fig. 4B, a generalised view of processing apparatus which may be used to carry out the present invention is shown.

Fig. 4A shows a typical personal computer architecture, such as the configuration used in the IBM Personal System/2 computer systems. The focal point of this architecture comprises a microprocessor 1 which may, for example, be an Intel 80286 or 80386 or similar microprocessor. The microprocessor 1 is connected to a bus 2 which comprises a set of data lines, a set of address lines and a set of control lines. A plurality of I/O devices or memory or storage devices 3-8 are connected to the bus 2 through separate adapters 9-14, respectively. For example, the display 4 may be the IBM Personal/System Colour Display 8514 in which the adapter 10 may be integrated into the planar board. The other devices 3 and 5-8 and adapters 9 and 11-14 are either included as part of an IBM Personal System/2 system or are available as plug-in options from the IBM Corporation. For example, the random access memory 6 and the read-only memory 7 and their corresponding adapters 12 and 13 are included as standard equipment in the IBM Personal System/2 system, although additional random access memory to supplement memory 6 may be added via a plug-in memory expansion option.

Within the read-only memory 7 are stored a plurality of instructions, known as the basic input/output operating system, or BIOS, for execution by the microprocessor 1. The BIOS controls the fundamental operations of the computer. An operating system 15 such as OS/2 is loaded into the memory 6 and runs in conjunction with the BIOS stored in the ROM 7. It will be understood by those skilled in the art that the personal computer system could be configured so that parts or all of the BIOS are stored in the memory 6 rather than in the ROM 7 so as to allow modifications to the basic system operations by changes made to the BIOS program, which would then be readily loadable into the random access memory 6.

For more information on the Personal System/2 products, and the operating system OS/2, the following reference manuals, which are herein incorporated by reference, are suggested. Technical Reference Manual, Personal System/2 (Model 50,60 systems), IBM Corporation, part number 68X2224, order number S68X-2224. Technical Reference Manual, Personal System/2 (Model 80), IBM Corporation, part number 68X2256, order number S68X-2256. IBM Operating System/2 version 1.0 Standard Edition Technical Reference, IBM Corporation, part number 6280201, order number 5871-AAA. Iacobucci, Ed, OS/2 Programmer's Guide, McGraw Hill, 1988.

In the apparatus, an application program 20 such as a relational database manager may also be loaded into the memory 6 or be resident on media 5. Media 5 may include, but is not limited to, a diskette, or a hard file. The relational database manager 20 may also be considered an extension of the operating system 15. The relational database manager 20 comprises a comprehensive set of relational database manager tasks that provide instructions to the microprocessor 1 to enable the processing system shown in Fig. 4A and Fig. 4B to perform relational database functions. An application program 18 loaded into the memory 6 is the to run in conjunction with the operating system previously loaded into the memory 6.

In the processing system of Fig. 4A and Fig. 4B, the operator accesses the relational database manager 20 through operator control keys on keyboard 3. The keyboard drives the processor 1 which is operably connected to the display 4 as well as the media storage 5 and memory 6 through bus 2. As a user interacts through the keyboard 3 with an application program which interacts with the relational database manager 20, the relational database manager 20 and its data are displayed to the user through display 4. In addition to a user interacting with the relational database manager 20, an application 18 could interact with the database manager 20 through SQL commands in the application 18.

In the relational database system as previously described, the processing of mixed character data is more costly than processing of single-byte character data because character boundaries do not necessarily occur after each byte of data. This means that certain operations, those which involve moving character data, can be accomplished relatively quickly for single-byte data by simply moving a number of bytes of data (characters) from one address to another. Since mixed characters may span byte boundaries, algorithms to move data from one address to another must be accompanied by algorithms to determine character boundaries and to do special processing to maintain the integrity of the character data.

Means are provided in the embodiment of the invention for the user to specify a subtype of the character type on a per column basis as either single byte or mixed data. The user can specify the subtype of the character type of the column as the column is being created in either the CREATE TABLE statement or the ALTER TABLE statement.

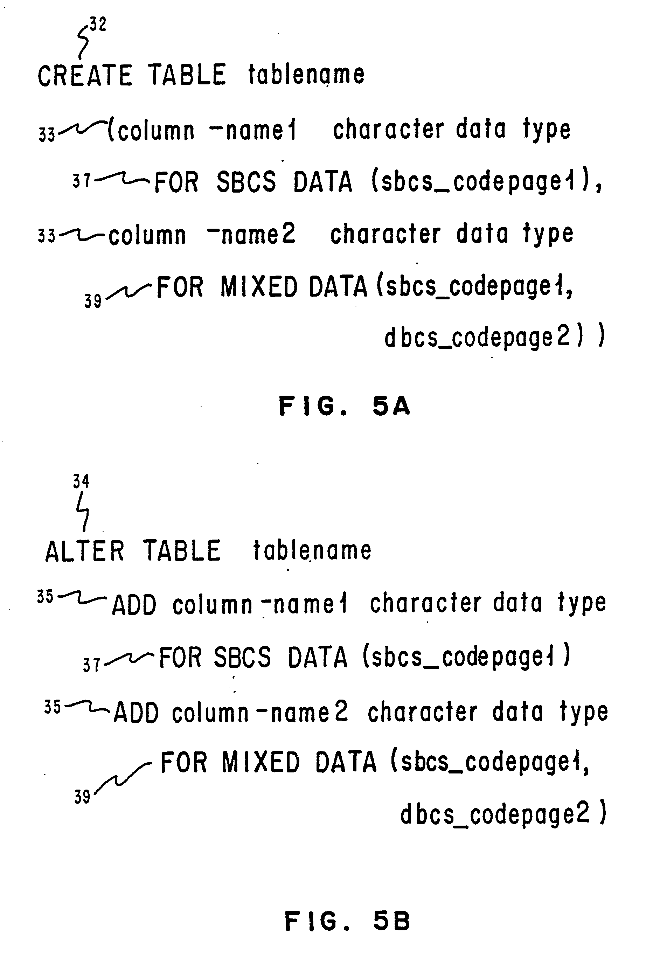

As shown in Fig. 5A and Fig. 5B, the CREATE TABLE and ALTER TABLE statements 32, 34 are shown which a user would use to create a subtype 37, 39 of the character data-type of the column-name 33, 35 specified. The subtype FOR SBCS DATA 37 for column-name1 33, 35 specifies column-name1 for single byte character set data. The subtype FOR MIXED DATA 39 for column-name2 33, 35 specifies column-name2 for mixed, single byte and double byte, character set data.

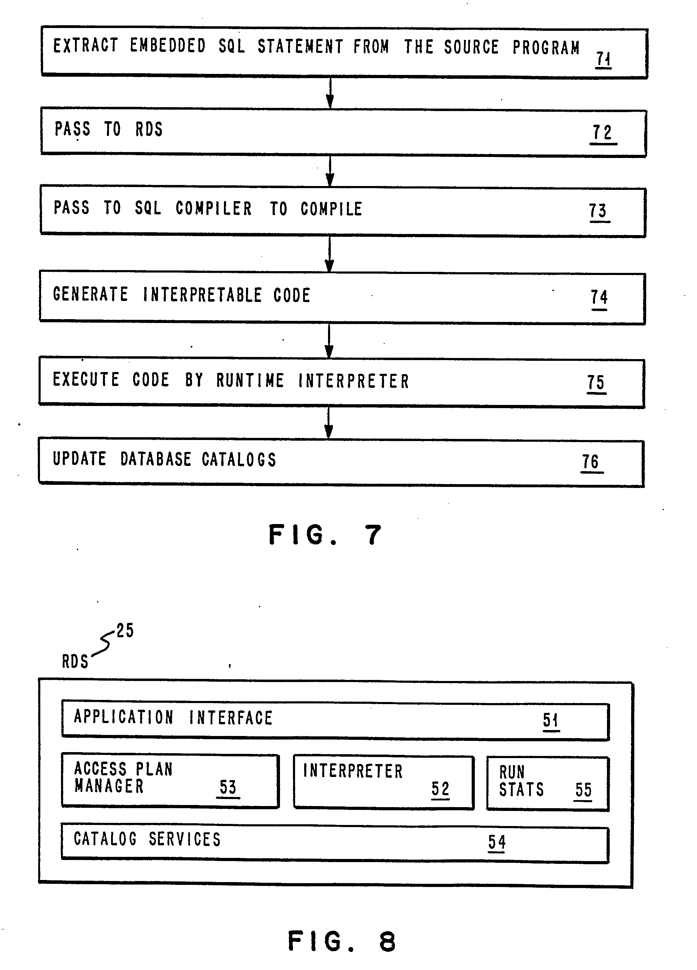

These SQL statements 32, 34 and the subtypes specified in those statements are processed in the embodiment of the invention as follows. Reference will be made to the structure of the kernel 42 of the relational database manager 20 as shown in Fig. 6, the structure of relational data services 25 as shown in Fig. 8, and the flow diagram as shown in Fig. 7.

The precompiler 43 extracts the embedded SQL statements from the source program 18 and passes them to basic system utilities 41 of the relational database manager 20, step 71 Fig. 7. Basic system utilities 41 passes the SQL statements through to relational data services 25. Relational data services 25 is the interface to the SQL compiler 24 which compiles the SQL statements, step 73. The SQL compiler 24 generates interpretable code, step 74, which is executed by the runtime interpreter 52 of relational data services 25, step 75. This code calls catalog services routines 54 of relational data services 25 which update the database catalogs 23, step 76.

The above steps will be further described in reference to pseudo code and flow diagrams after the following discussion on the structural components and functions of the kernel 42 of the relational database manager 20, Fig. 6, and the structural components and functions of relational data services 25, Fig. 6, and Fig. 8.

Relational data services 25 provides for the creation and manipulation of tables from the SQL CREATE TABLE and ALTER TABLE statements. Relational data services 25 also manages the database catalogs 23. The database catalogs are themselves tables within the relational database, and they reside within the file system in which the relational database resides, such as on media 5 Fig. 4A.

A database catalog 23 is a secondary database object which is set up and maintained by the database manager. All catalog tables are created when the database is created, and are implemented as relational database tables. The catalog tables are no different than user created tables other than that they are used and maintained exclusively by the kernel, although they may be queried by the user. Several catalog tables are maintained by the system and contain information about user tables and programs.

The relational data services 25, Fig. 6, is an interface to the kernel 42 of the database manager 20 for precompilers 43 and applications 18. The precompiler calls the SQL compiler 24 to compile the SQL statements. The applications execute (interpret) the SQL statements in their compiled form.

The kernel 42 of the relational database manager comprises relational data services 25, the SQL compiler 24, sort/list services 44, data management services 45, index manager 46, data services 47, data protection services 48, buffer pool services 49, and operating system services 50.

The SQL compiler 24 compiles the SQL statements. The SQL compiler has three major functions in the system and method of this invention. The SQL compiler provides parsing, semantics, and code generation. The parser performs lexical and syntax checking, and builds the parse tree. The semantic function includes the catalog lookup, and the semantic checking of statements. In the code generation phase, threaded-code is generated along with the rest of the access section.

The sort/list services 44 provides sorting and temporary relation (list) management functions. The data management services 45 provides a physical model of the database and provides physical table manipulation. The index manager 46 provides physical index manipulation. The data services 47 provides data value comparison, data conversion, and math. The data protection services 48 provides transaction management, concurrency control, and recovery. The buffer pool services 49 provides buffer and file management and I/O functions. The operating system services 50 provides memory management.

The components of the relational data services 25 are shown in Fig. 8. The application interface 51 handles and routes requests from the precompiler 43, Fig. 6, applications 18, and utilities. The interpreter 52 executes (interprets) the SQL statements in their compiled form, using threaded-code for the statements' object code. The interpreter 52 calls the appropriate routine for each operator in the threaded code such as the database operators (table access, merge, join, etc.) and the expression operators (add, compare, etc.). The access plan manager 53 manages the access plans in the catalogs and in memory, and manages the access sections in the catalogs and in memory. Catalog services 54 is the interface to the data management services 45 (Fig. 6) for the manipulation of the .catalogs. Run Stats 55 is the interface to data management services 45 (Fig. 6) which gathers statistics on the tables and indexes.

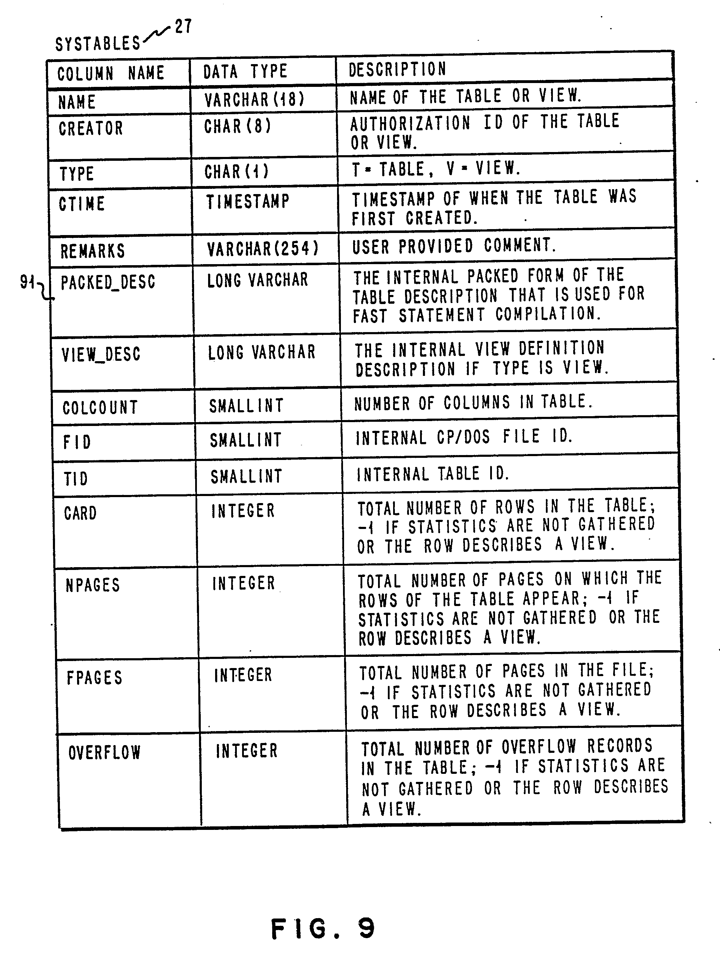

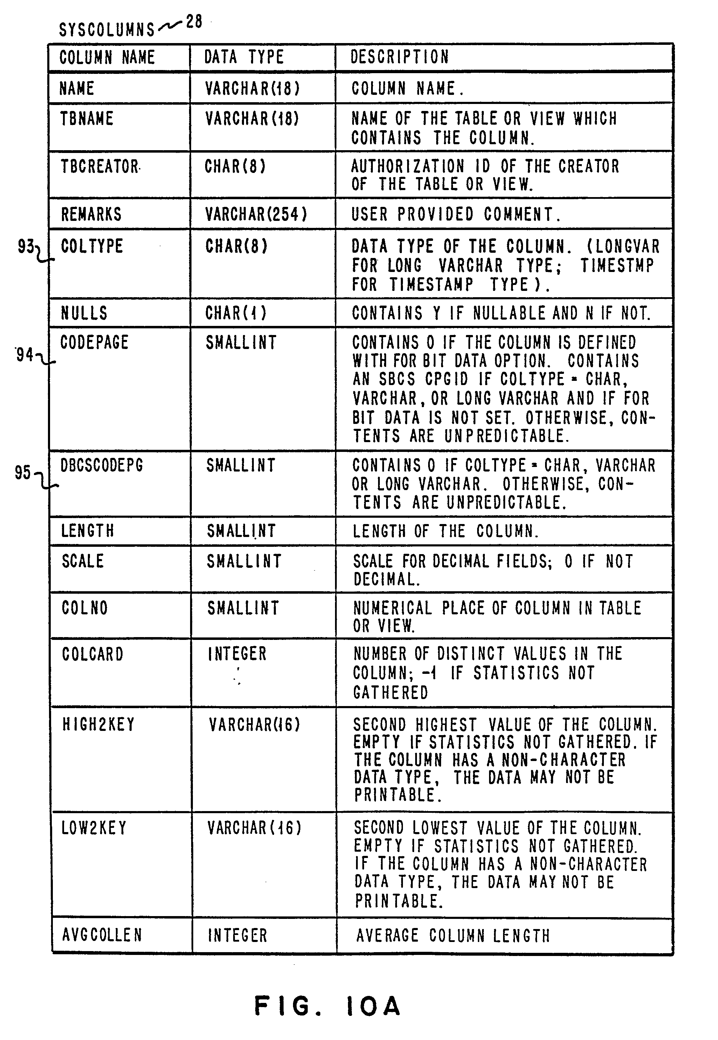

When a CREATE TABLE 32 or ALTER TABLE 34 statement contains the FOR MIXED DATA parameter 39 or the FOR SBCS DATA 37 on a character column 33, 35 the following changes are made to the database catalogs 23 as shown in Fig. 9 and Fig. 10A. The SYSTABLES 27, Fig. 9, and the SYSCOLUMNS 28, Fig. 10A, are two tables in the database catalog table 23. In the SYSTABLES 27, one row is inserted for each new table or view that is created. All of the catalog tables have entries in this table, including itself. In the SYSCOLUMNS 28, one row is inserted for each defined column of each table or view. All of the catalog tables have entries in this table, also.

Referring to SYSTABLES 27, Fig. 9, in the column PACKED_DESC (packed description) 91, an internal data type of CHAR MIXED, VARCHAR MIXED, or LONG VARCHAR MIXED is encoded for the column specified as FOR MIXED DATA. This internal data type is used by the database manager to determine whether to apply mixed data processing to the character column. If neither FOR MIXED DATA or FOR SBCS DATA is specified, and if FOR BIT DATA is not specified, FOR MIXED DATA is assumed in the double byte version of the product. FOR BIT DATA is used in the embodiment of this invention to hold binary data. Any binary data in a character column that is not to be processed as character data is specified as FOR BIT DATA. However, in other embodiments of this invention, this additional classification is not necessary.

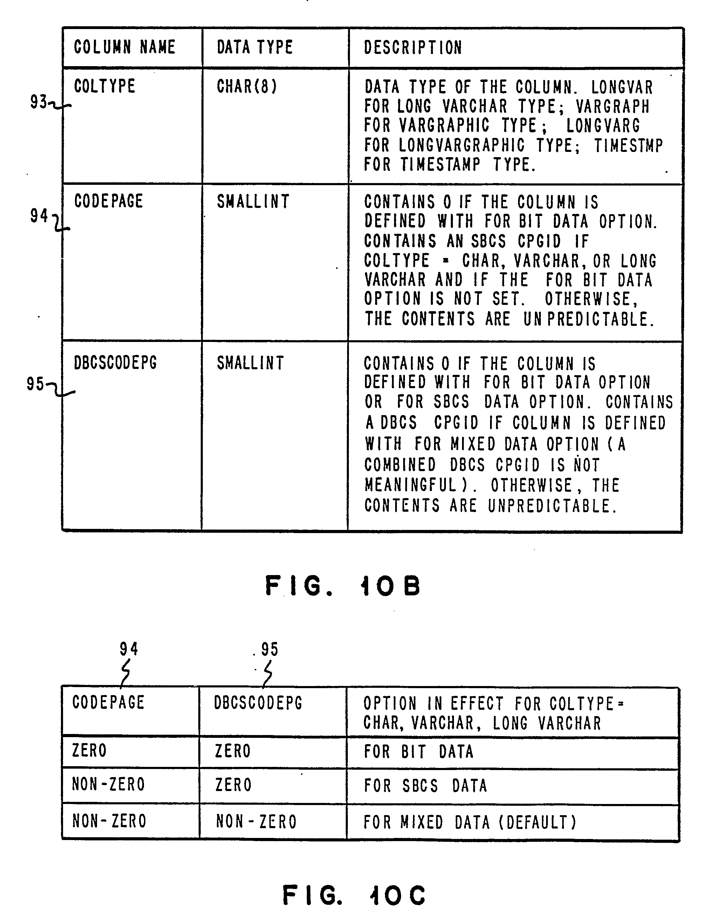

Referring to SYSCOLUMNS 28, Fig. 10A, in the column COLTYPE (data type of column) 93, Fig. 10A, the actual SQL data type of CHAR, VARCHAR, LONG VARCHAR is encoded. In the columns CODEPAGE 94 and DBCSCODEPG 95, Fig. 10A, 10B, 10C the following information is encoded.

If there is a query on the column type 93 in the SYSCOLUMN table 28 of the database system catalogs 23, the following will occur. If the column type 93 in system columns 28 indicate a character data type such as CHAR, VARCHAR, LONG VARCHAR, then the code page column, CODEPAGE 94, and the double byte character set code page column, DBCSCODEPG 95, can be queried to determine the subtype of the character type.

The encoding scheme used in the embodiment allows a fast and efficient method of determining the subtype, as shown in Fig. 10C. If the CODEPAGE and DBCSCODEPG columns 94, 95 each have a zero value, then the subtype specifies FOR BIT DATA which is data that will not be processed as character data. If the CODEPAGE column 94 has a non-zero value and the DBCSCODEPG column 95 has a zero value, the column has been specified for single byte only data. If the CODEPAGE column 94 has a non-zero value, and the DBCSCODEPG column 95 has non-zero value, the column is mixed data which is the default value if the subtype of the column is not specifically specified. Furthermore, if the value in the CODEPAGE column 94 or the DBCSCODEPG column 95 is a non-zero value, that non-zero value will be a value that specifies a particular code page that is to be used for that column of the database. In the case of FOR BIT DATA, no code page will be specified since that data is not to be processed as character data.

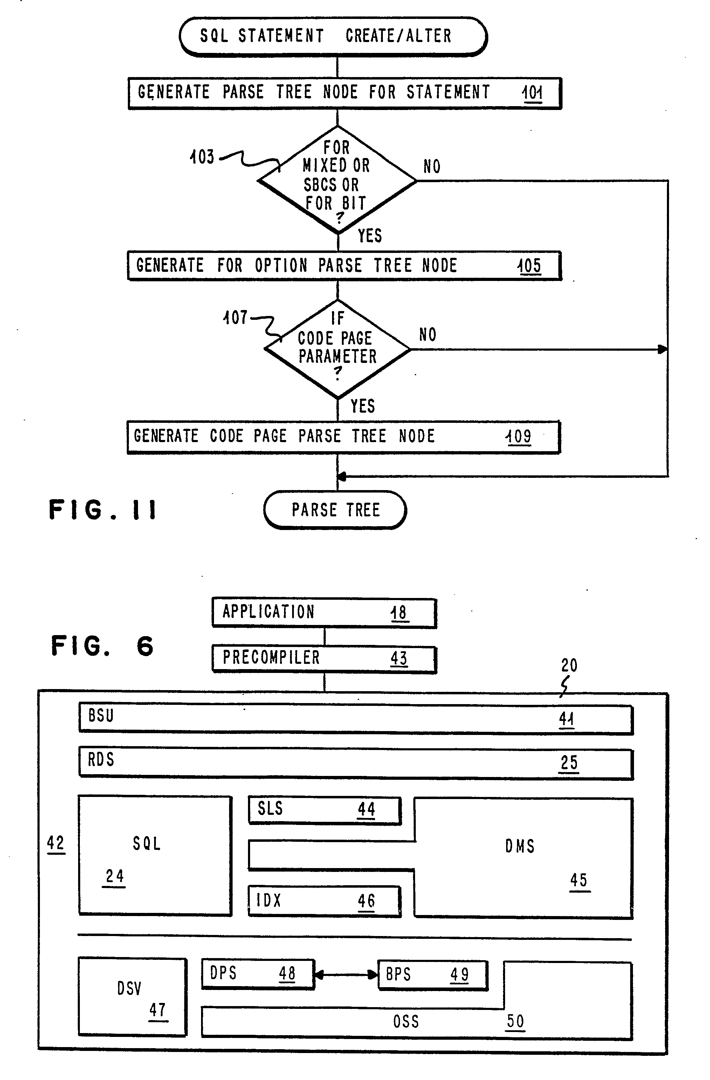

The operation of the specific embodiment of the above described system is illustrated by the following pseudo code and is described with reference to Figs. 11-15.

Abbreviations:

CD --Column Description (in packed description)
DDL--Data Definition Language
DMS--Data Management Services

     I) Add support for MIXED and SBCS character subtypes to CREATE TABLE and ALTER TABLE statement
     II) Add support for CODE PAGE attribute on column
NOTE: Steps A) and B) are done once, off-line, to create a new SQL parser.

A) Modify SQL parser Grammar Table to add the following productions.

| | |
|---|---|
| ColumnType | = CharacterType CharacterOption |
| CharacterOption | = Empty |
| | = ForMixed (generate FOR OPTION node) |
| | = ForSBCS (generate FOR OPTION node) |
| ForMixed | = FOR MIXED DATA MixedOption |
| ForSBCS | = FOR SBCS DATA SBCSOption |
| MixedOption | = Empty |
| | = ( CodePage, CodePage ) |
| SBCSOption | = Empty |
| | = ( Codepage ) |
| CodePage | = Integer |

B) Generate new parser table (using off-line parser generator and new Grammar Table).

```
        C) Call SQL Compiler to compile CREATE TABLE

                        or ALTER TABLE statement

            (SQL Compiler Parser Phase)
```

```
                  Note: Input is SQL statement.
                      Output is parse tree.
              /* IF (CREATE TABLE statement) */
                  /* Generate parse tree for CREATE TABLE
                                        statement. */
              /* ELSE (ALTER TABLE statement) */
                   /* Generate parse tree for ALTER TABLE state-
                                            ment. */
              /* ENDIF */
                   /* IF (FOR MIXED or FOR SBCS parameter
                                        present)    */
                       /* Generate FOR OPTION node in parse
                                            tree.    */
```

With reference to Fig. 11 and the pseudo code as shown above, the operation of the SQL parser phase of the SQL compiler, is described. The SQL compiler is called to compile the SQL statements. In the SQL parser phase, the SQL compiler generates a parse tree node for the CREATE TABLE statement or the ALTER TABLE statement, step 101. If FOR MIXED or FOR SBCS or FOR BIT has been indicated in the SQL statement, then a FOR OPTION parse tree is generated, step 103, 105. If there has been a code page parameter defined in the SQL statement, step 107, then a code page parse tree node is generated, step 109.

```
                  (SQL Compiler Code Generation Phase)
                       Note: Input is parse tree.
                         Output is updated packed description and
                                            interpretable code.
                  /* IF (CREATE TABLE statement) */
                     /* Store DDL CREATE TABLE Opcode in threaded
                                            code */
                  /* ELSE (ALTER TABLE statement) */
                     /* Store DDL ALTER TABLE Opcode in threaded
                                            code */
                  /* ENDIF */



                  /* Initialize parse tree traversal pointer to
                                     parse tree root node */
```

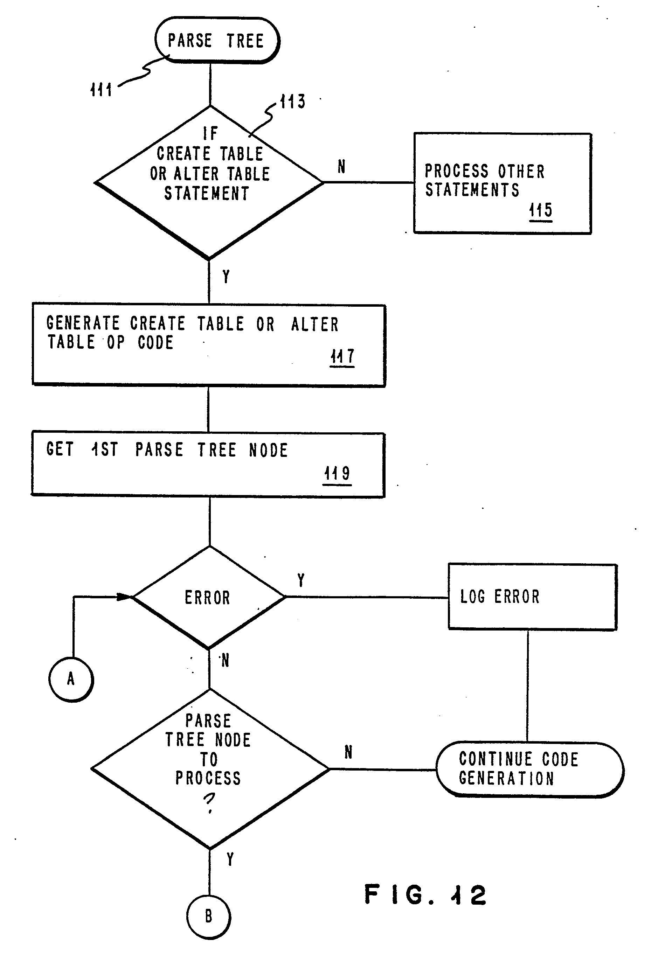

With reference to Fig. 12, and the pseudo code as shown above, the code generation phase of the SQL compiler is described. The parse tree with all of its nodes as previously generated in Fig. 11 is the input into the code generation phase, step 111. If the SQL statement is neither the CREATE TABLE nor the ALTER TABLE, step 113, then the SQL statements are process as usual, step 115. If the SQL statement is either the CREATE TABLE statement or the ALTER TABLE statement, then the op code for that statement is created, step 117. During the code generation phase, the parse tree root node is pointed to, step 119.

```
/*          TRAVERSE PARSE TREE          */
/* DO WHILE (no errors detected and parse
          tree still needs to be traversed) */
/* SWITCH (parse tree node type) */
    /* case Header Column List node type
                            (start of CDs) */
        /* Call routine to initialize CD
                packed description fields*/
    /* END CASE */
    /* case Column name identifier node
                                    type */
        /* Allocate storage for CD structure
                        and column name */
        /* IF (storage allocated successful-
                            ly)  THEN */
            /* set up miscellaneous column
                            information */
            /* Initialize CD codepage #1 to
                    database SBCS codepage */
            /* Initialize CD codepage #2 to
                    database DBCS codepage */
```

```
                    /* Update length of packed de-
                              scription */
          /* ENDIF */
      /* END CASE */
      /* case FOR OPTION node type */
          /* SWITCH (subtype of FOR OPTION) */
              /* case FOR BIT DATA node type */
                  /* SWITCH (column type in CD
                        (set during processing
                        of preceding node)) */
                      /* case column type = CHAR
                                    MIXED */
                          /* Store CHAR column type
                                in CD type field */
                      /* END CASE */
                      /* case column type =
                            VARCHAR MIXED */
                          /* Store VARCHAR column
                            type in CD type field*/
                      /* END CASE */
                      /* case column type = LONG
                                VARCHAR MIXED */
                          /* Store LONG VARCHAR col
                            type in CD type field */
                      /* END CASE */
                  /* ENDSWITCH column type */
                  /* Set CD codepages #1 and #2
                                to 0 */
              /* END CASE FOR BIT */
              /* case SINGLE BYTE CHARACTER SET
                            node type */
                  /* SWITCH (column type in CD
                        (set during processing
                        of preceding node)) */
```

```
                    /* case column type = CHAR
                                    MIXED */
                      /* Store CHAR column type
                            in CD type field */
                    /* END CASE */
                    /* case column type =
                         VARCHAR MIXED */
                      /* Store VARCHAR column
                       type in CD type field /*
                    /* END CASE */
                    /* case column type = LONG
                            VARCHAR MIXED   */
                        /* Store LONG VARCHAR col
                        type in CD type field */
                    /* END CASE */
                 /* ENDSWITCH column type */
                 /* IF (codepage was specified)
                                    THEN */
                    /* Get codepage from save
                                        area */
                    /* Store codepage in CD
                        codepage #1 field */
                    /* Store 0 in CD·
                        codepage #2 field */
                 /* ENDIF */
              /* END CASE SBCS */
              /* case MIXED CHARACTERS node
                                    type */
                 /* IF (codepage was specified)
                                       THEN */
                    /* Get codepage 2 from save
                                        area */
                    /* Store codepage in CD
                        codepage #2 field */
```

```
                    /* Get codepage 1 from save
                                     area */
                    /* Store codepage in CD
                              codepage #1 field */
                 /* ENDIF */
               /* END CASE MIXED */
             /* ENDSWITCH subtype of FOR */
         /* END CASE FOR OPTION */
         /* case Codepage node type */
             /* Save Codepage Identifier */
         /* END CASE */
         /* case data type node (char,
            varchar...) for column */
             /* SWITCH (data type) */
                 /* case Data type = CHAR */
                     /* Store CHAR MIXED column type
                                    in CD type field */
                 /* END CASE */
                 /* case Data type = VARCHAR */
                     /* IF (length was specified,
                                  i.e., this is a
                                  VARCHAR) THEN */
                         /* Store VARCHAR MIXED
                            col type in CD type  */
                     /* ELSE */
                         /* Store LONG VARCHAR MIXED
                               col type in CD type */
                     /* ENDIF */
                 /* END CASE */
             /* ENDSWITCH data type */
         /* case CD node type (end of column
                              definition) */
             /* no action */
         /* END CASE */
```

```
/* ENDSWITCH parse tree node type */
/* Increment Parse Tree Pointer to next
                                    node */
/* ENDWHILE */
```

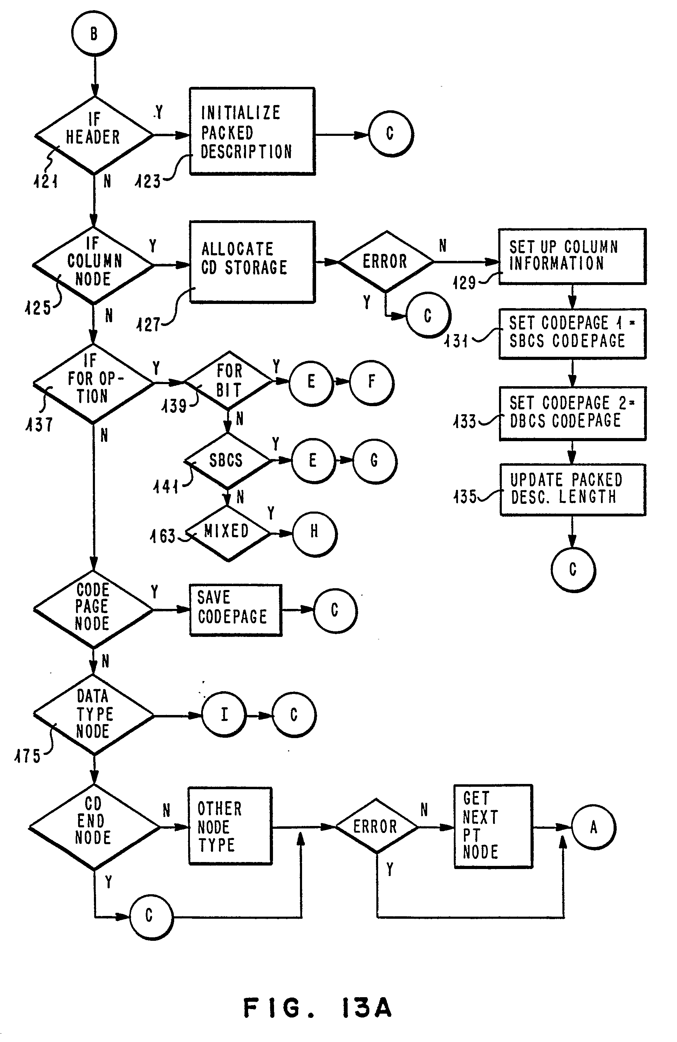

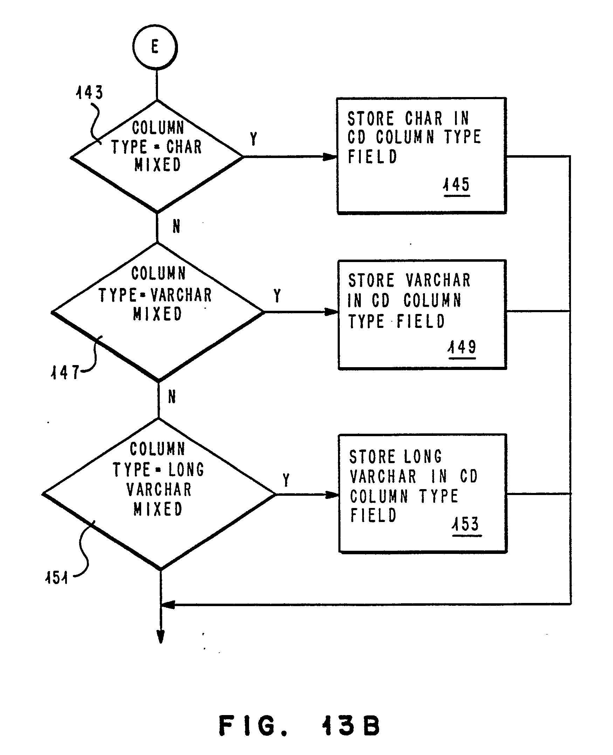

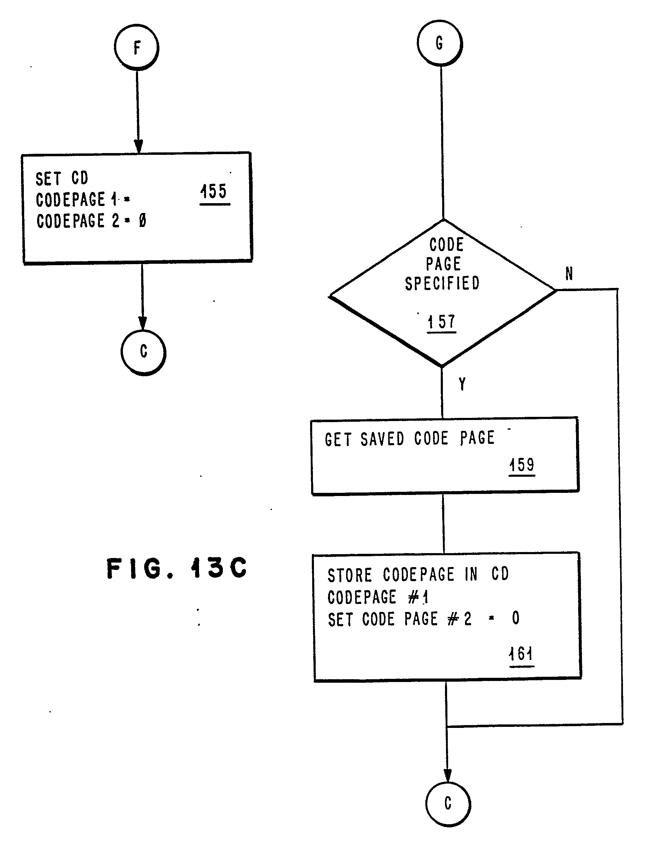

Referring to Figs. 13A-13E, and the pseudo listed above, the following steps occur depending upon the type of the node. If the node is a header column, step 121, the packed description column is initialised, step 123. If the node is a column node, step 125, storage for the column description in the packed description is allocated, step 127. Then the column information is set up, step 129, and the single byte code page and the double byte code page are initialised to the code pages of the database, steps 131, 133. The packed description length is then updated, step 135.

If the node is a FOR option such as FOR BIT, FOR SBCS, or FOR MIXED, step 137, the following occur for each of the above cases.

If it is the FOR BIT node or the FOR SBCS node, steps 139, 141 and the column type is CHAR MIXED, step 143, Fig. 13B, then the CHAR is stored in the column description column type field, step 145. If the column type is VARCHAR MIXED, step 147, then the VARCHAR is stored in the column description type field, step 149. If the column type is LONG VARCHAR MIXED, step 151, then the LONG VARCHAR is stored in the column description column type field, step 153.

Referring back to Fig. 13A, in the case of the FOR BIT option, step 139, the code pages for both the single byte code page and the double byte code page are set to zero, step 155, Fig. 13C. In the case of the FOR SBCS option, step 141, Fig. 13A, if the code page field is specified, step 157, Fig. 13C, then that codepage is retrieved and stored in the column description for the first code page, the single byte character set code page, steps 159, 161. The double byte code page is set to zero.

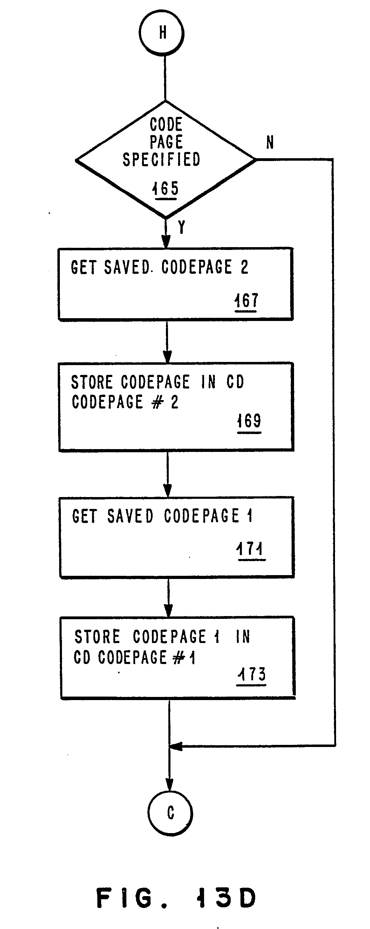

Referring to Fig. 13A and 13D, in the case where the FOR MIXED option is specified, step 163, Fig. 13A, and the code pages are further specified, step 165, Fig. 13D, the second code page is retrieved and stored in the column description under code page #2, steps 167 and 169. Then the first code page is retrieved and stored in the column description under code page #1, steps 171 and 173.

Referring to Fig. 13A and 13E, if the node being pointed to is a data type node, step 175, Fig. 13A, the following steps occur as shown in Fig. 13E. If the data type is CHAR, CHAR MIXED is stored in the column description column type field, steps 177, 179. If the data type is VARCHAR, and the length is specified, steps 181, 183 the VARCHAR MIXED is stored in the column description column type field, step 185. If the length is not specified, LONG VARCHAR MIXED is stored in the column description column type, step 187.

The above steps repeat until all the nodes have been processed in the above fashion as indicated.

After the SQL compiler performs the above steps, relational data services calls the interpreter to execute the threaded code and the packed description that was generated. The output will be a new table that is created in the database, a row in the SYSTABLES catalog table for the newly created table, and a row in SYSCOLUMNS catalog table for each column of the new table, if the statement is a CREATE TABLE statement. The output for a ALTER TABLE will be a row in the SYSCOLUMNS catalog table for each new column added, and an updated row for the altered table in the SYSTABLES catalog table. The following pseudo code illustrates the steps of executing the threaded code and the packed description that was generated by the interpreter.

```
C) Call run-time interpreter to execute CREATE TABLE
                                            statement
```

Note: Input is:

14

```
                    threaded code and packed description
                                generated by SQL compiler.
              Output is:
                  new table created in database;
                  row in SYSTABLES catalog table for
                                    created table;
                  row in SYSCOLUMNS catalog table for
                              each column of new table.


        /* set up DMS table description structure from
                              packed description */
        /* Call DMS to create the table */
        /* To SYSTABLES,
                  add row (including packed description
                              column) for new table */
        /* Get a pointer to the first column
                              description */
        /* For each column in the packed description
                              for the table */
          /* set up SYCOLUMNS CODEPAGE field from
                              codepage #1 */
          /* set up SYSCOLUMNS DBCSCODEPG field from
                              codepage #2 */
          /* set up SYSCOLUMNS COLTYPE field with
                        character type, not subtype */
            /* SWITCH (column type in packed descrip-
                              tion CD) */
              /* case column type = CHAR MIXED */
                /* Store "CHAR" in SYSCOLUMNS
                              column type field */
          /* END CASE */
              /* case column type = VARCHAR MIXED */
                /* Store "VARCHAR" in SYSCOLUMNS
                              column type field */
```

15

```
                    /* END CASE */
                    /* case column type = LONG VARCHAR
                                             MIXED */
                        /* Store "LONGVAR" in SYSCOLUMNS
                                 column type field */
                    /* END CASE */
                 /* ENDSWITCH */
              /* Insert the Row into SYSCOLUMNS */
           /* ENDFOR */
3) Call run-time interpreter to execute ALTER TABLE
                                          statement
       Note: Input is:
                    threaded code and packed description
                             generated by SQL compiler.
             Output is:
             new column descriptions added to
                                 table in database;
             updated row in SYSTABLES catalog table
                                   for altered table;
                 row in SYSCOLUMNS catalog table for
                          each new column of table.
    /* set up DMS table description structure from
                             packed description */
    /* Call DMS to alter the table description in
                             the database */
    /* In SYSTABLES, update packed description
                    column for altered table */
    /* Get a pointer to the first column descrip-
                                       tion */
    /* For each column in the packed description
                         for the table */
      /* set up SYCOLUMNS CODEPAGE field from
                         codepage #1 */
      /* set up SYSCOLUMNS DBCSCODEPG field from
```

```
                                             codepage #2 */
                   /* set up SYSCOLUMNS COLTYPE field with
                         character type, not subtype */
                   /* SWITCH (column type in packed
                               description CD) */
                     /* case column type = CHAR MIXED */
                        /* Store "CHAR" in SYSCOLUMNS
                                 column type field */
                     /* END CASE */
                     /* case column type = VARCHAR MIXED */
                        /* Store "VARCHAR" in SYSCOLUMNS
                                 column type field */
                     /* END CASE */
                     /* case column type = LONG VARCHAR
                                              MIXED */
                        /* Store "LONGVAR" in SYSCOLUMNS
                                 column type field */
                     /* END CASE */
                     /* ENDSWITCH */
                     /* Insert the Row into SYSCOLUMNS */
                   /* ENDFOR */
```

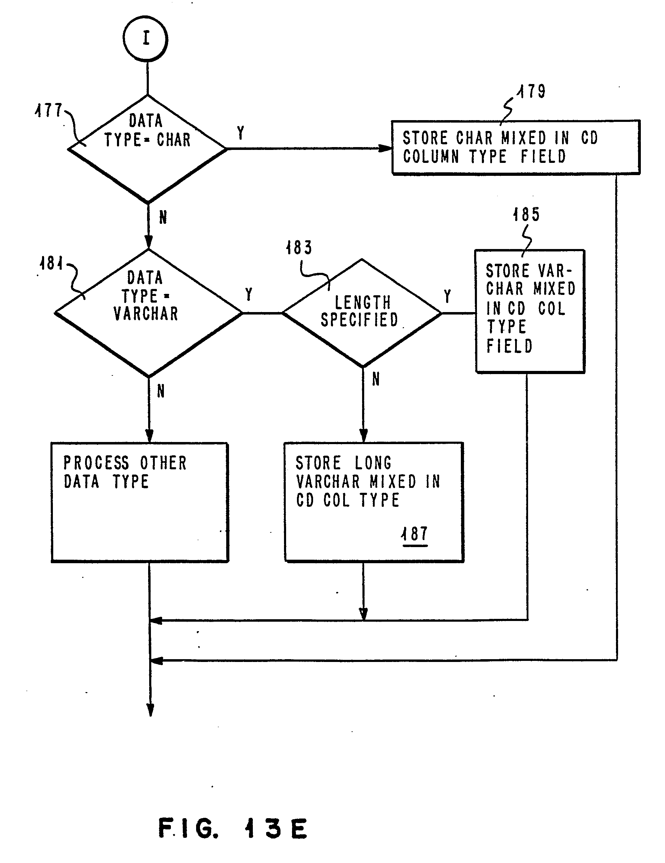

With reference to Fig. 14, the pseudo code listed above will be described. The data management services table description will be set up from the packed description, step 201. Data management services will then actually create the new physical table or column, step 203. Catalog services will add the row to SYSTABLES, step 205. A row in SYSCOLUMNS will be added for each column of the newly created table or newly added column. The SYSCOLUMNS CODEPAGE column will be set with codepage1 from the column description, step 209, and the SYSCOLUMNS DBCSCODEPG column will be set with the codepage2 from the column description, step 211.

If the column description column type is CHAR MIXED, the SYSCOLUMN COLTYPE will be set to CHAR, steps 213, 214. If the column description column type is VARCHAR MIXED, the SYSCOLUMN COLTYPE will be set to VARCHAR, steps 215, 216. If the column description column type is LONG VARCHAR MIXED, the SYSCOLUMN COLTYPE will be set to LONG VARCHAR, steps 217, 218. If the column description column type is neither CHAR MIXED, VARCHAR MIXED, or LONG VARCHAR MIXED, then the SYSCOLUMN COLTYPE will be set to the column description column type, step 219. A row will be added to SYSCOLUMNS, step 221, and the next column description will be retrieved, step 223.

The following pseudo code illustrates updating the SQLDA with the code page specified. For a further description and usage of SQLDA, the following manual, which is herein incorporated by reference, is suggested. IBM Systems Application Architecture Common Programming Interface Database Reference, IBM Corporation, Document Number SC26-438-0, 1987.

```
            Update SQLDA with code page information while
                        processing SQL PREPARE or DESCRIBE
                                        of SELECT statement
            /* while processing SELECT list */
                /* if list item is column */
                    /* copy codepage #1 (SBCS code page)
                                from packed description to
                                    SQLDA SQLDATA field */
                    /* copy codepage #2 (DBCS code page)
                                from packed description to
                                    SQLDA SQLIND  field */
                /* else not column */
                    /* copy codepage #1 (SBCS code page)
                        from database code page area to
                                    SQLDA SQLDATA field */
                    /* copy codepage #2 (DBCS code page)
                            from database code page area


                                    to SQLDA SQLIND  field */
                /* endif */
            /* endwhile */
```

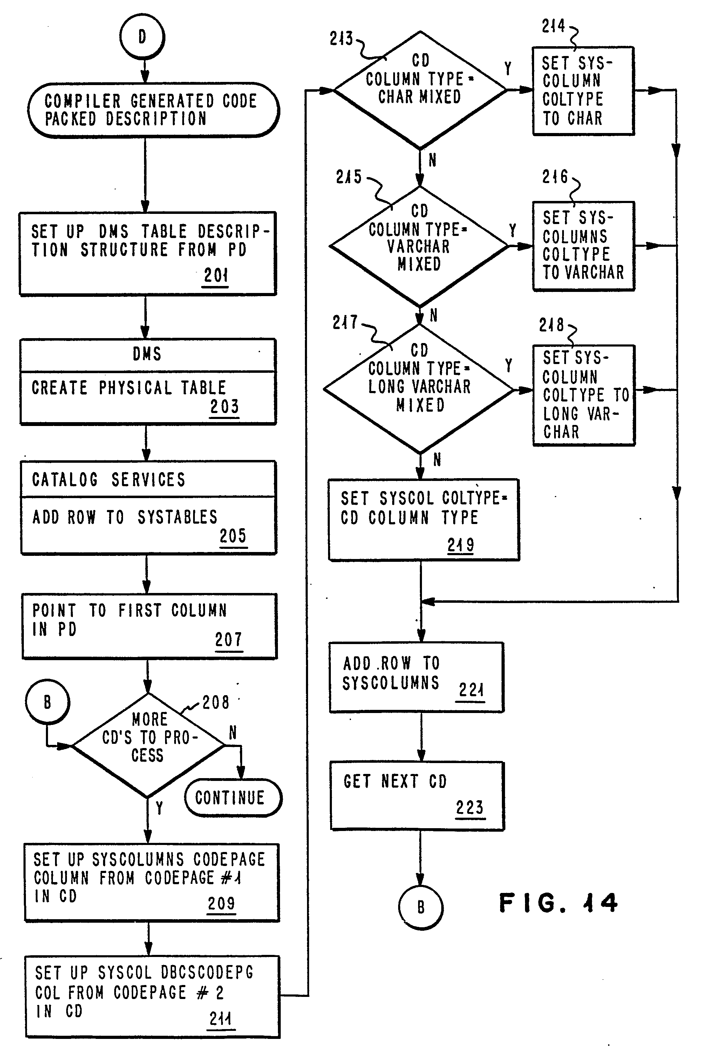

With reference to Fig. 15, the pseudo code listed above will be described. If the SQL statement is not a PREPARE or DESCRIBE of a SELECT, the SQLDA will not be updated, steps 225, 227. If the SQL statement is a PREPARE or DESCRIBE of a SELECT, the first item of the select list will be retrieved, step 229. If the select list item is column, step 231, the SBCS code page (codepage1) will be copied from the pack description to the SQLDATA field, step 233. The DBCS code page (codepage2) will be copied from the pack description to the SQLIND field, step 235. If the select list item is not a column, the SBCS code page (codepage1) will be copied from the database code page area to the SQLDATA, step 239. The DBCS code page (codepage2) will be copied from the database code page area to SQLIND, step 241. The next select list item is retrieved, step 237 and the above steps are repeated for all of the select list items, step 243.

The following illustrates the operation of retrieving data from the database tables with columns further specified with the subtype as mixed data or single byte character set data as in the system and method of this invention.

Data is extracted from the database tables and returned to an application program using the SELECT and FETCH statements. Using an SQLDA (SQL Descriptor Area) or a host variable list, the database manager moves data to the data areas in the application program. For character data types, if the length of the target data area in the application program is shorter than the length of the requested database data, the data will be truncated and a warning flag will be set in the SQLCA, as described in the Database Reference above. If the character data is mixed data, special processing is required during truncation so that the truncation does not bisect a double-byte character, resulting in an invalid final character.

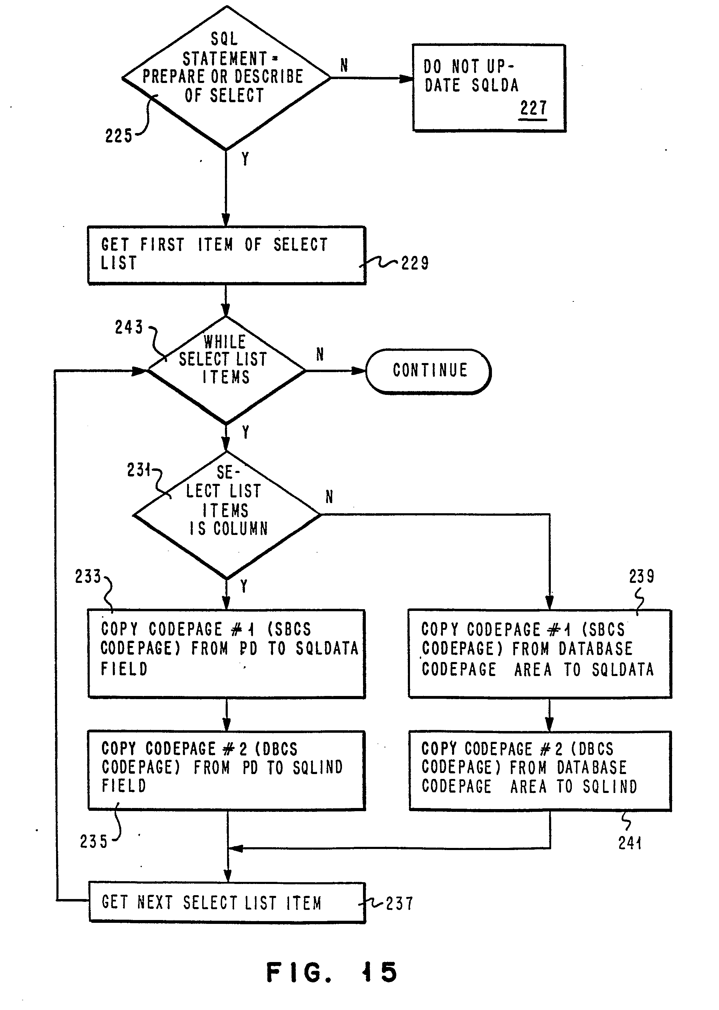

The truncation algorithm for mixed data is as shown in Fig. 16A. "N" represents the length in bytes of the target area, step 245. "FB" represents the address of the final byte of the truncated data, step 247. "N" bytes of data are moved from the start address of the database data to the target address, step 249. FB becomes the start of the target area + N -1, step 251. The last character boundary is determined before FB, step 253. If FB is the first byte of a double-byte character, then FB is replaced with a single byte space, steps 255, 257. Otherwise, there is no action.

In comparison, the truncation algorithm for single-byte data is shown in Fig. 16B. Again, "N" is the length in bytes of the target area, step 259. Next, N bytes of data are moved from the start address of the database data to the target address, step 261.

As illustrated, the mixed data truncation algorithm Fig. 16A includes steps which are not necessary for the single-byte-only data Fig. 16B. Determining the last character boundary in step 253, Fig. 16A, can be particularly costly, depending upon the length and content of the data. The addition of the internal data type which indicates mixed data enables the runtime code which does truncation to selectively call the simple single-byte routine Fig. 16B or the more costly mixed routine Fig. 16A.

The SUBSTR SCALAR FUNCTION is also more efficient for single byte data than for mixed data. Scalar functions can be used in place of expressions in SQL statements. SUBSTR is a scalar function which returns a substring of a character data field. The scalar functions including SUBSTR are further described in "IBM Database 2 SQL Reference" Document Number SC26-4346-3, IBM Corporation.

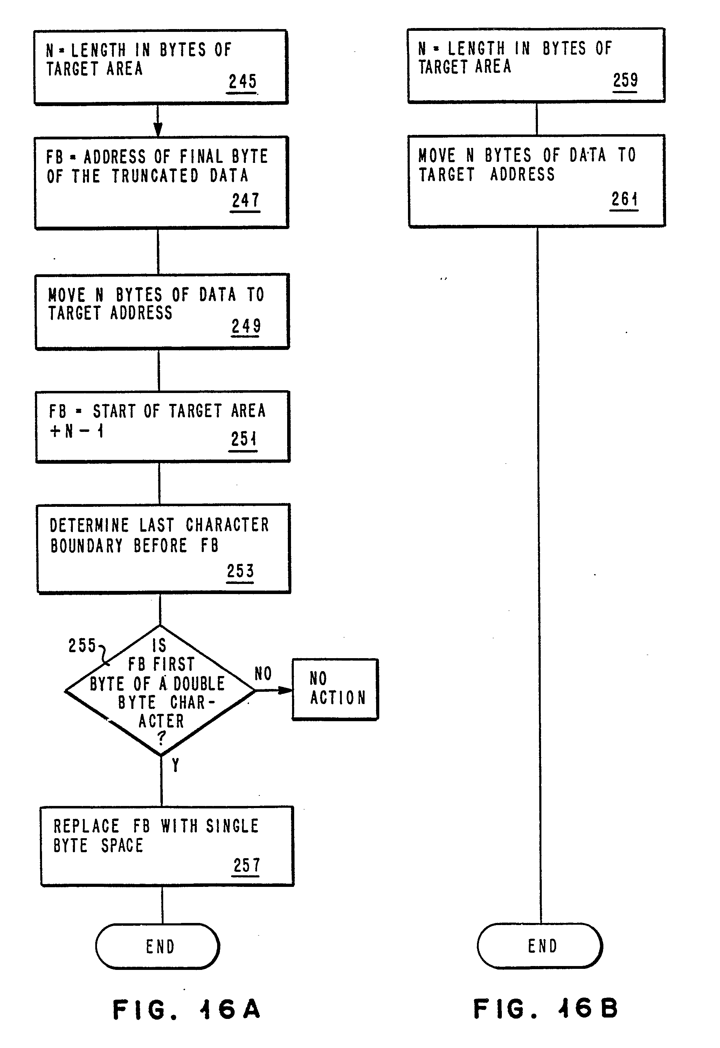

The first parameter of the SUBSTR function specifies the database character string from which a substring will be extracted. Parameter 2 is the starting byte position of the substring. Parameter 3 is the length in bytes of the result. For mixed data the final byte of the substring must be processed using the truncation routine described above to assure that the last character is valid. The first character of the substring must also be examined to assure the resultant string does not begin with the second byte of a double-byte character. The algorithm for this check is shown in Fig. 17. The validation of the SUBSTR first character for mixed data is as follows. "N" is the parameter 2 of SUBSTR, step 263. "SB" is the start byte of the substring, step 265. "SB" becomes the address of parameter 1 database data + N - 1, step 267. The last character boundary before SB is then determined, step 269. If SB is the second byte of a double-byte character, then the first byte of the substring is replaced with a single byte space, steps 271, 273. Otherwise, there is no action.

If parameter 1 is not of MIXED type, it is not necessary to call the routines to do the special boundary checking and processing of the first and last characters of the substring, steps 269, 271, 273, 253, 255, and 257.

An application program can also take advantage of the identification of SBCS data and MIXED data. An application program might need to do special processing on character data depending on whether it is single-byte only or mixed. For instance, a program might want to generate a report that is sorted on a particular field. Mixed data cannot be sorted with a simple collating based on a 256-byte table of ordered values. Sorting algorithms for double-byte characters are complex, and vary with the language involved.

Therefore it would be useful for an application to be able to query the system catalogs and determine whether a column in a table is defined as MIXED, before attempting to apply costly algorithms to the data. This allows a generalised user interface or report generator application to do sophisticated processing of character data that was created by other applications, since the information about the type of character data is stored in the database, independent from the creating application.

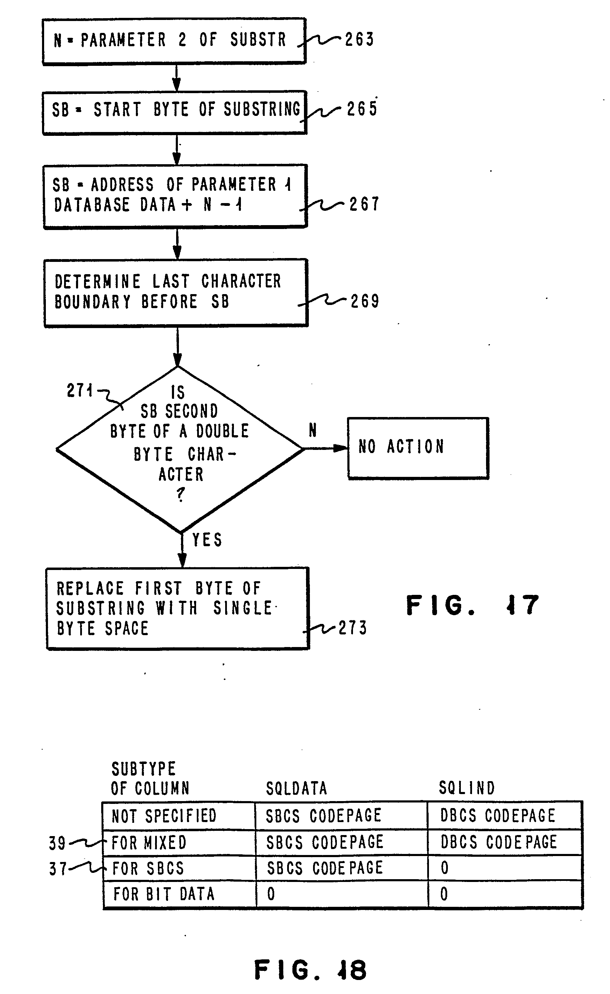

The methods by which an application program gets information from the system catalogs are: 1) SELECT from a catalog table and 2) PREPARE or DESCRIBE into an SQLDA. These SQL operations are further described in "IBM Database 2 SQL Reference" Document Number SC26-4346-3, IBM Corporation. Since FOR MIXED DATA and FOR SBCS DATA are data subtypes rather than SQL data types, the application cannot examine the COLTYPE column of SYSCOLUMNS or the SQLTYPE field of the SQLDA and obtain the subtype information. Instead the following methods are provided to return the information to the application. For a character data type the fields SQLDATA and SQLIND are encoded as shown in Fig. 18 after a DESCRIBE (or a PREPARE with an INTO clause) statement. The application can also query the CODEPAGE column 94 and the DBCSCODEPG column 95 in the SYSCOLUMNS 28 Fig. 10A for the encoding scheme as shown in Fig. 10C.

Similarly, an application may be sensitive to the specific code page governing character data encoding. For example, an application may wish to determine whether it understands the encoding scheme of data prior to any attempt to retrieve, and especially alter such data. In support of these needs, this invention allows an application to not only query the database to determine the code page of a given character field, but also an application can declare the code page environment of a character field when creating it. Furthermore, since the design of this invention allows the code page attributes of each column to be declared independently from those of any other, advanced systems and applications which accommodate multiple code page environments are fully supported.

The following further illustrates the significance of specifying single byte character set data in relational database systems that allow mixed byte data. For illustration purposes, single byte characters will be

19

distinguished from double byte characters using the following convention:

- single byte characters will be represented by lower case alphabetics; e.g., a,b,c,...
- double byte characters will be represented by double upper case alphabetics; e.g., AA,BB,CC,...

As an example, consider a table named SAMPLE with 2 columns named IVORY and HEINZ, where IVORY contains only single byte character strings (values) and where HEINZ contains mixed single byte and double byte character strings. Such a table could have been created with the following SQL statement:

```
CREATE TABLE SAMPLE

    (IVORY VARCHAR(10) FOR SBCS DATA,

    HEINZ  VARCHAR(10) FOR MIXED DATA)
```

Using the convention established above for representation of single byte and double byte characters, some values for IVORY and HEINZ are provided below.

| SAMPLE ROW | IVORY | HEINZ |
|---|---|---|
| 1 | abc | AABBCC |
| 2 | dog | DDOOg |
| 3 | qwertyuiop | ZZxCCvBBn |
| 4 | last value | qQQqQQ |

Using the sample table above, the following illustrates some differences in the method of processing data strings composed of pure single byte characters and in the method of processing data strings composed of both single byte and double byte characters.

A mixed string has the property that it can only be parsed from the beginning of the string. That is, no byte of the string has any meaning unless the nature of every preceding byte of the string has been determined. To illustrate, suppose the user/application wanted to delete only the last byte of each value in IVORY and HEINZ. The processing method used for the values of the IVORY column is straightforward. The end of the string is scanned, and the last byte of the string is discarded. If this same processing method were used for the values of HEINZ column, such an algorithm would discard the second byte of a double byte character if the last character of the string was a double byte character. Therefore a more complicated processing algorithm is needed for the mixed byte column. First, the nature (single byte or double byte) of the last character of the string must be determined. Simply checking the value of the last byte is not sufficient, as both single byte characters and second bytes of double byte characters share code point values. Thus, to determine whether the last character of a string is a single byte or a double byte character, a complex parsing algorithm must be applied. This is obviously time consuming and tedious, but unavoidable.

The results of this "last byte" truncate operation on the values of our SAMPLE table are shown below:

| SAMPLE ROW | IVORY | HEINZ |
|---|---|---|
| 1 | ab | AABB |
| 2 | do | DDOO |
| 3 | qwertyuio | ZZxCCvBB |
| 4 | last value | qQQq |

If one can assume in advance that a column contains only single byte character strings, then it is possible to use truncation algorithms for such columns which offer significant performance and simplicity improvements over methods which operate on mixed single byte and double byte character strings. The "FOR SBCS DATA" option allows the database user/application to specify this column attribute.

As another example illustrating the increased complexity of mixed string processing over pure single byte character string processing, the "substring" function is considered. This string operator allows selection of part of a character string by specification of an initial byte location and a length.

The same processing differences between pure and mixed strings which were encountered for truncation also apply to the substring function. If a substring from a pure single byte value were selected, the string would only need to be scanned to the nth byte (where n is the argument of the substring function which specifies the character to begin the substring). Then this byte would be selected plus the next m-1 bytes (where m is the specified length of the substring in characters) as the result. However, if a mixed single byte and double byte string is being processed, the nature of the first and last bytes in the substring must be determined to ensure the validity of the characters in the substring. The performance penalty of such an involved algorithm can be significant.

In summary, the illustrations above should highlight a fundamental difference between pure single byte and mixed single byte and double byte strings. Any byte in a pure single byte string is a character. Nothing can be the about an arbitrary byte in a mixed string without knowing the nature of bytes which precede it in the string.

The effect of this difference is that string operations on pure single byte values (and therefore columns) are generally faster and simpler than the same operations on mixed single byte and double byte values. Thus, the capability to declare a column as pure or mixed, coupled with algorithms sensitive to this difference, can yield significant performance benefits. This, then, is a strong motivation for the FOR SBCS DATA and FOR MIXED DATA column declarations.

In the relational database system of the present invention the following has been particularly shown and described. An extension to the SQL language is provided to allow a user/application to specify whether a column in a database table contains only single byte character set data, or mixed single byte character set data and double byte character set data. Specifying whether a column contains single byte character set data or mixed data is achieved by specifying the subtype of the character data types including CHAR, VARCHAR, and LONG VARCHAR. The user application can specify the subtype of character data within a column as the column is created or added by specifying FOR SBCS or FOR MIXED or FOR BIT data in either the CREATE TABLE statement or the ALTER TABLE statement.

Along with specifying the subtype as either for single byte data or for mixed data, the user/application can further specify the codepages to be used for the column of the table in the database. Internally within the database manager of this invention, the subtype is recorded in terms of the code page attributes of the character data type as stored in the database system catalogs. This encoding scheme provides an efficient method of determining whether a column is only for single byte character set data or mixed data, and at the same time knowing the correct codepage that is to be used for that column simply by querying the code page columns within the database system catalogs.

Although the foregoing invention has been particularly shown and described with reference to the preferred embodiments thereof, it will be understood by those skilled in the art that other changes in form may be made without departing from the scope of the claims.

## Claims

1. A relational database system having mixed data of single byte character set data and double byte character set data, the system comprising:
a plurality of columns in at least one table of the relational database system; and
means for selectively designating a column in the table as being for single byte character set data only.

2. A system as claimed in claim 1 comprising means for selectively designating a different column in the table as being for mixed data of both single byte character set data and double byte character set data.

3. A system as claimed in claim 1 or claim 2 wherein the means for selectively designating a column as being for single byte character set data only is operable when the table is created.

4. A system as claimed in claim 3 wherein the means for selectively designating a different column as being for mixed data of both single byte character set data and double byte character set data is operable when the table is created.

5. A system as claimed in claim 3 or claim 4 wherein the means for selectively designating the columns comprises means for responding to a CREATE TABLE statement for specifying a column in the table as being for single byte character set data only.

6. A system as claimed in any one of the preceding claims means for selectively designating a column as being for single byte character set data only is operable when a column of this type is added to the table.

7. A system as claimed in claim 6 wherein the means for selectively designating a different column as being for mixed data of both single byte character set data and double byte character set data is operable when the different one of the columns is added to the table.

8. A system as claimed in claim 7 or claim 8 wherein the means for designating the columns comprises means for responding to an ALTER TABLE statement for specifying a column in the table as being for single byte character set data only.

9. A system as claimed in any one of the preceding claims wherein the means for selectively designating a column comprises means for specifying a subtype of a character data type.

10. A system as claimed in any one of the preceding claims comprising means for specifying a codepage to be used for a column in a table.

11. A system as claimed in claim 10 comprising:
means for specifying a first code page for a first column in the table;
means for specifying a second code page for a different column in the table.

12. A system as claimed in claim 10 or claim 11 wherein the means for specifying a code page comprises means for recording a code page attribute in one of a plurality of database system catalogs.

13. A system as claimed in claim 12 further comprising means for querying at least one of the database system catalogs to determine simultaneously a codepage for a column and whether the column contains only single byte character set data.

14. A system as claimed in any one of the preceding claims further comprising means for processing data of a column based on the type of data specified for a column.

15. A system as claimed in claim 14 comprising:
first processing logic for columns with mixed double byte and single byte data; and
second processing logic, faster than the first processing logic, for processing columns of data designated as single byte data only.

16. A relational database system comprising:
a plurality of columns in a table of data:
means for specifying a plurality of character data types for each of the plurality of columns; and
means for specifying a plurality of subtypes of the character data types.

17. A system as claimed in claim 16 further comprising means for processing data of the columns based on the specified subtype.

18. A system as claimed in claim 17 further comprising means for recording, in a SQLDA structure of the relational database system, a code page attribute of the subtype.

19. A system as claimed in claim 18 further comprising means for recording a plurality of code page attributes of the subtypes in a single byte code page column and in a double byte code page column of a database system catalog.

20. A system as claimed in claim 19 further comprising means for querying the database system catalog to determine simultaneously the subtypes of the character data for any one of the columns and a plurality of code page attributes for any one of the columns.

21. A method for processing a table of mixed data in a relational database system, the method comprising tagging a column of data as being for single byte character set data only.

22. A method as claimed in claim 21 wherein the step of tagging comprises the substeps of
  (i) specifying, in a statement for creating a table in the relational database system, a subtype of a character data type for the column; and
  (ii) storing, in a system catalog of the relational database system, the subtype in terms of at least one code page attribute of the character data type.

23. A method as claimed in claim 22 wherein the substep (i) comprises further specifying, in the statement, at least one codepage for the column.

24. A method as claimed in claim 22 or claim 23 further comprising the subsequent step of querying the system catalog to determine simultaneously the subtype of the column and a codepage of the column.

25. A method as claimed in any one of claims 21 to 25 further comprising the subsequent step of processing the tagged column of data with a first algorithm which is faster than a second algorithm for processing a column of mixed data.

26. A method as claimed in anyone of claims 21 to 25 comprising
specifying, in a statement for adding the column to an existing table in the relational database system, a subtype of a character data type for the column; and storing, in a system catalog of the relational database system, the subtype in terms of at least one code page attribute of the character data type.

27. A method as claimed in claim 26 comprising specifying, in the statement for adding a column, at least one codepage for the column.

28. A method as claimed in claim 22 or in claim 26 wherein the step of storing the subtype in a system catalog comprises recording a first value identifying a code page in a single byte code page column of a system catalog and recording a second value of zero in a double byte code page column of the system catalog if the subtype is single byte character set data only.

29. A method as claimed in claim 22 or in claim 26 wherein the step of storing the subtype in a system catalog comprises: recording a first value identifying a first code page in a single byte code page column of a system catalog and recording a second value identifying a second code page in a double byte code page column of the system catalog if the subtype is mixed data having single byte character set data and double byte character set data.

TABLE: DIRECTORY ～16

| NAME | ADDRESS |
|---|---|
| SMITH | 5887 IRVING |
| JONES | 2364 12TH ST. |
| JOHNSON | 305 M STREET |
| WILLIAMS | 4607 51ST AVE. |

# FIG. 1

USER ～19

APPLICATION
**18**

INPUT DEVICES
(KEYBOARD, MOUSE)
**3**

RELATIONAL DATABASE MANAGER
**20**

OPERATING SYSTEM
**15**

MEMORY
**6**

DISK

SYSTEM CATALOGS
23
**5**

# FIG. 4B

FIG. 2

EP 0 336 579 A2

| Hex Digits 1st → 2nd ↓ | 0- | 1- | 2- | 3- | 4- | 5- | 6- | 7- | 8- | 9- | A- | B- | C- | D- | E- | F- |
|---|---|---|---|---|---|---|---|---|---|---|---|---|---|---|---|---|
| -0 |  | ► |  | 0 | @ | P | ` | p | Ç | É | á |  | └ | ╨ | α | ≡ |
| -1 | ☺ | ◄ | ! | 1 | A | Q | a | q | ü | æ | í |  | ┴ | ╥ | ß | ± |
| -2 | ☻ | ↕ | " | 2 | B | R | b | r | é | Æ | ó | █ | ┬ | ╥ | Γ | ≥ |
| -3 | ♥ | ‼ | # | 3 | C | S | c | s | â | ô | ú | │ | ├ | ╚ | π | ≤ |
| -4 | ♦ | ¶ | $ | 4 | D | T | d | t | ä | ö | ñ | ┤ | ─ | ╚ | Σ | ⌠ |
| -5 | ♣ | § | % | 5 | E | U | e | u | à | ò | Ñ | ╡ | ┼ | ╞ | σ | ⌡ |
| -6 | ♠ | ▬ | & | 6 | F | V | f | v | å | û | ª | ╢ | ╞ | ╥ | µ | ÷ |
| -7 | • | ↨ | ' | 7 | G | W | g | w | ç | ù | º | ╖ | ╫ | ╫ | τ | ≈ |
| -8 | ◘ | ↑ | ( | 8 | H | X | h | x | ê | ÿ | ¿ | ╕ | ╨ | ╪ | Φ | ° |
| -9 | ○ | ↓ | ) | 9 | I | Y | i | y | ë | Ö | ⌐ | ╣ | ╟ | ┘ | Θ | ∙ |
| -A | ◙ | → | * | : | J | Z | j | z | è | Ü | ¬ | ║ | ╧ | ┌ | Ω | · |
| -B | ♂ | ← | + | ; | K | [ | k | { | ï | ¢ | ½ | ╗ | ╤ | █ | δ | √ |
| -C | ♀ | ∟ | , | < | L | \ | l | | | î | £ | ¼ | ╝ | ╟ | ▬ | ∞ | ⁿ |
| -D | ♪ | ↔ | - | = | M | ] | m | } | ì | ¥ | ¡ | ╜ | ═ | █ | φ | ² |
| -E | ♫ | ▲ | . | > | N | ^ | n | ~ | Ä | ₧ | « | ╛ | ╪ | █ | ε | ■ |
| -F | ☼ | ▼ | / | ? | O | _ | o | ⌂ | Å | ƒ | » | ┐ | ╧ | ▬ | ∩ |  |

21

22

| HexDigits 1st→ 2nd↓ | 0- | 1- | 2- | 3- | 4- | 5- | 6- | 7- | 8- | 9- | A- | B- | C- | D- | E- | F- |
|---|---|---|---|---|---|---|---|---|---|---|---|---|---|---|---|---|
| -0 |  | ⌐ |  | 0 | @ | P | ` | p |  |  |  |  |  |  |  |  |
| -1 | ╞ | ╪ | ! | 1 | A | Q | a | q |  |  |  |  |  |  |  |  |
| -2 | ╥ | ↕ | = | 2 | B | R | b | r |  |  |  |  |  |  |  |  |
| -3 | ╨ |  | # | 3 | C | S | c | s |  |  |  |  |  |  |  |  |
| -4 | ╗ | ▓ | $ | 4 | D | T | d | t |  |  |  |  |  |  |  |  |
| -5 | = | ╧ | % | 5 | E | U | e | u |  |  |  |  |  |  |  |  |
| -6 | ‖ | ╤ | & | 6 | F | V | f | v |  |  |  |  |  |  |  |  |
| -7 | → | ╤ | ' | 7 | G | W | g | w |  |  |  |  |  |  |  |  |
| -8 |  |  | ( | 8 | H | X | h | x |  |  |  |  |  |  |  |  |
| -9 | ○ | ╧ | ) | 9 | I | Y | i | y |  |  |  |  |  |  |  |  |
| -A | ⊠ | ↓ | * | : | J | Z | j | z |  |  |  |  |  |  |  |  |
| -B |  | ↵ | + | ; | K | [ | k | { |  |  |  |  |  |  |  |  |
| -C |  | ← | , | < | L | \ | l | ¦ |  |  |  |  |  |  |  |  |
| -D |  | — | - | = | M | ] | m | } |  |  |  |  |  |  |  |  |
| -E |  | ↑ | . | > | N | ^ | n | ~ |  |  |  |  |  |  |  |  |
| -F | ☼ | ↓ | / | ? | O | _ | o | ̶ |  |  |  |  |  |  |  |  |

FIG. 3

FIG. 4A

CREATE TABLE tablename

33 (column -name1 character data type

37 FOR SBCS DATA (sbcs_codepage1),

33 column -name2 character data type

39 FOR MIXED DATA (sbcs_codepage1,

dbcs_codepage2) )

**F I G. 5A**

ALTER TABLE tablename

35 ADD column -name1 character data type

37 FOR SBCS DATA (sbcs_codepage1)

35 ADD column -name2 character data type

FOR MIXED DATA (sbcs_codepage1,

39

dbcs_codepage2)

**F I G. 5B**

| EXTRACT EMBEDDED SQL STATEMENT FROM THE SOURCE PROGRAM | 71 |

| PASS TO RDS | 72 |

| PASS TO SQL COMPILER TO COMPILE | 73 |

| GENERATE INTERPRETABLE CODE | 74 |

| EXECUTE CODE BY RUNTIME INTERPRETER | 75 |

| UPDATE DATABASE CATALOGS | 76 |

## FIG. 7

RDS ⌐25

| APPLICATION INTERFACE | | 51 |

| ACCESS PLAN MANAGER 53 | INTERPRETER 52 | RUN STATS 55 |

| CATALOG SERVICES | 54 |

## FIG. 8

SYSTABLES ⟋ 27

| COLUMN NAME | DATA TYPE | DESCRIPTION |
|---|---|---|
| NAME | VARCHAR(18) | NAME OF THE TABLE OR VIEW. |
| CREATOR | CHAR(8) | AUTHORIZATION ID OF THE TABLE OR VIEW. |
| TYPE | CHAR(1) | T = TABLE, V = VIEW. |
| CTIME | TIMESTAMP | TIMESTAMP OF WHEN THE TABLE WAS FIRST CREATED. |
| REMARKS | VARCHAR(254) | USER PROVIDED COMMENT. |
| PACKED_DESC | LONG VARCHAR | THE INTERNAL PACKED FORM OF THE TABLE DESCRIPTION THAT IS USED FOR FAST STATEMENT COMPILATION. |
| VIEW_DESC | LONG VARCHAR | THE INTERNAL VIEW DEFINITION DESCRIPTION IF TYPE IS VIEW. |
| COLCOUNT | SMALLINT | NUMBER OF COLUMNS IN TABLE. |
| FID | SMALLINT | INTERNAL CP/DOS FILE ID. |
| TID | SMALLINT | INTERNAL TABLE ID. |
| CARD | INTEGER | TOTAL NUMBER OF ROWS IN THE TABLE; -1 IF STATISTICS ARE NOT GATHERED OR THE ROW DESCRIBES A VIEW. |
| NPAGES | INTEGER | TOTAL NUMBER OF PAGES ON WHICH THE ROWS OF THE TABLE APPEAR; -1 IF STATISTICS ARE NOT GATHERED OR THE ROW DESCRIBES A VIEW. |
| FPAGES | INTEGER | TOTAL NUMBER OF PAGES IN THE FILE; -1 IF STATISTICS ARE NOT GATHERED OR THE ROW DESCRIBES A VIEW. |
| OVERFLOW | INTEGER | TOTAL NUMBER OF OVERFLOW RECORDS IN THE TABLE; -1 IF STATISTICS ARE NOT GATHERED OR THE ROW DESCRIBES A VIEW. |

91

FIG. 9

SYSCOLUMNS ～28

| COLUMN NAME | DATA TYPE | DESCRIPTION |
|---|---|---|
| NAME | VARCHAR(18) | COLUMN NAME. |
| TBNAME | VARCHAR(18) | NAME OF THE TABLE OR VIEW WHICH CONTAINS THE COLUMN. |
| TBCREATOR | CHAR(8) | AUTHORIZATION ID OF THE CREATOR OF THE TABLE OR VIEW. |
| REMARKS | VARCHAR(254) | USER PROVIDED COMMENT. |
| COLTYPE | CHAR(8) | DATA TYPE OF THE COLUMN. (LONGVAR FOR LONG VARCHAR TYPE; TIMESTMP FOR TIMESTAMP TYPE). |
| NULLS | CHAR(1) | CONTAINS Y IF NULLABLE AND N IF NOT. |
| CODEPAGE | SMALLINT | CONTAINS 0 IF THE COLUMN IS DEFINED WITH FOR BIT DATA OPTION. CONTAINS AN SBCS CPGID IF COLTYPE = CHAR, VARCHAR, OR LONG VARCHAR AND IF FOR BIT DATA IS NOT SET. OTHERWISE, CONTENTS ARE UNPREDICTABLE. |
| DBCSCODEPG | SMALLINT | CONTAINS 0 IF COLTYPE = CHAR, VARCHAR OR LONG VARCHAR. OTHERWISE, CONTENTS ARE UNPREDICTABLE. |
| LENGTH | SMALLINT | LENGTH OF THE COLUMN. |
| SCALE | SMALLINT | SCALE FOR DECIMAL FIELDS; 0 IF NOT DECIMAL. |
| COLNO | SMALLINT | NUMERICAL PLACE OF COLUMN IN TABLE OR VIEW. |
| COLCARD | INTEGER | NUMBER OF DISTINCT VALUES IN THE COLUMN; -1 IF STATISTICS NOT GATHERED |
| HIGH2KEY | VARCHAR(16) | SECOND HIGHEST VALUE OF THE COLUMN. EMPTY IF STATISTICS NOT GATHERED. IF THE COLUMN HAS A NON-CHARACTER DATA TYPE, THE DATA MAY NOT BE PRINTABLE. |
| LOW2KEY | VARCHAR(16) | SECOND LOWEST VALUE OF THE COLUMN. EMPTY IF STATISTICS NOT GATHERED. IF THE COLUMN HAS A NON-CHARACTER DATA TYPE, THE DATA MAY NOT BE PRINTABLE. |
| AVGCOLLEN | INTEGER | AVERAGE COLUMN LENGTH |

93 → COLTYPE
94 → CODEPAGE
95 → DBCSCODEPG

FIG. IOA

| COLUMN NAME | DATA TYPE | DESCRIPTION |
|---|---|---|
| COLTYPE | CHAR(8) | DATA TYPE OF THE COLUMN. LONGVAR FOR LONG VARCHAR TYPE; VARGRAPH FOR VARGRAPHIC TYPE; LONGVARG FOR LONGVARGRAPHIC TYPE; TIMESTMP FOR TIMESTAMP TYPE. |
| CODEPAGE | SMALLINT | CONTAINS 0 IF THE COLUMN IS DEFINED WITH FOR BIT DATA OPTION. CONTAINS AN SBCS CPGID IF COLTYPE = CHAR, VARCHAR, OR LONG VARCHAR AND IF THE FOR BIT DATA OPTION IS NOT SET. OTHERWISE, THE CONTENTS ARE UNPREDICTABLE. |
| DBCSCODEPG | SMALLINT | CONTAINS 0 IF THE COLUMN IS DEFINED WITH FOR BIT DATA OPTION OR FOR SBCS DATA OPTION. CONTAINS A DBCS CPGID IF COLUMN IS DEFINED WITH FOR MIXED DATA OPTION (A COMBINED DBCS CPGID IS NOT MEANINGFUL). OTHERWISE, THE CONTENTS ARE UNPREDICTABLE. |

93, 94, 95

## FIG. 10B

| CODEPAGE | DBCSCODEPG | OPTION IN EFFECT FOR COLTYPE= CHAR, VARCHAR, LONG VARCHAR |
|---|---|---|
| ZERO | ZERO | FOR BIT DATA |
| NON-ZERO | ZERO | FOR SBCS DATA |
| NON-ZERO | NON-ZERO | FOR MIXED DATA (DEFAULT) |

94    95

## FIG. 10C

( SQL STATEMENT  CREATE/ALTER )

| GENERATE  PARSE  TREE  NODE  FOR  STATEMENT    101 |

103 —

◇ FOR MIXED OR SBCS OR FOR BIT ? ◇ — NO

YES

| GENERATE  FOR  OPTION  PARSE  TREE  NODE    105 |

107 —

◇ IF CODE PAGE PARAMETER ? ◇ — NO

YES

| GENERATE  CODE  PAGE  PARSE  TREE  NODE    109 |

( PARSE TREE )

## FIG. 11

## FIG. 6

| APPLICATION    18 |
| PRECOMPILER    43 |

20

| BSU    41 |

| RDS    25 |

42

| SQL 24 |

| SLS    44 |

| IDX    46 |

| DMS 45 |

| DSV 47 |

| DPS    48 | ↔ | BPS    49 |

| OSS    50 |

FIG. 12

FIG. 13A

FIG. 13B

F

```
SET CD
CODEPAGE 1 =          155
CODEPAGE 2 = Ø
```

C

G

CODE
PAGE
SPECIFIED

157

N

Y

```
GET SAVED CODE PAGE
                     159
```

```
STORE CODEPAGE IN CD
CODEPAGE #1
SET CODE PAGE #2  =  0

                     161
```

C

FIG. 13C

H

CODE
PAGE
SPECIFIED
165

N

Y

GET SAVED CODEPAGE 2

167

STORE CODEPAGE IN CD
CODEPAGE # 2

169

GET SAVED CODEPAGE 1

171

STORE CODEPAGE 1 IN
CD CODEPAGE # 1

173

C

FIG. 13D

F.I.G. 13E

FIG. 14

SQL STATEMENT = PREPARE OR DESCRIBE OF SELECT — 225

N → DO NOT UP-DATE SQLDA 227

Y

GET FIRST ITEM OF SELECT LIST — 229

243 — WHILE SELECT LIST ITEMS — N → CONTINUE

Y

231 — SE-LECT LIST ITEMS IS COLUMN — N

Y

233 — COPY CODEPAGE #1 (SBCS CODEPAGE) FROM PD TO SQLDATA FIELD

239 — COPY CODEPAGE #1 (SBCS CODEPAGE) FROM DATABASE CODEPAGE AREA TO SQLDATA

COPY CODEPAGE #2 (DBCS CODEPAGE) FROM PD TO SQLIND FIELD — 235

COPY CODEPAGE #2 (DBCS CODEPAGE) FROM DATABASE CODEPAGE AREA TO SQLIND — 241

GET NEXT SELECT LIST ITEM — 237

FIG. 15

```
┌─────────────────────────┐        ┌─────────────────────────┐
│ N = LENGTH IN BYTES OF  │        │ N = LENGTH IN BYTES OF  │
│ TARGET AREA             │        │ TARGET AREA             │
│                    245  │        │                    259  │
└───────────┬─────────────┘        └───────────┬─────────────┘
            │                                   │
            ▼                                   │
┌─────────────────────────┐        ┌───────────┴─────────────┐
│ FB = ADDRESS OF FINAL   │        │ MOVE N BYTES OF DATA TO  │
│ BYTE OF THE TRUNCATED   │        │ TARGET ADDRESS           │
│ DATA               247  │        │                    261  │
└───────────┬─────────────┘        └───────────┬─────────────┘
            │                                   │
┌───────────┴─────────────┐                    │
│ MOVE N BYTES OF DATA TO │                    │
│ TARGET ADDRESS          │                    │
│                    249  │                    │
└───────────┬─────────────┘                    │
            │                                   │
┌───────────┴─────────────┐                    │
│ FB = START OF TARGET    │                    │
│ AREA + N - 1            │                    │
│                    251  │                    │
└───────────┬─────────────┘                    │
            │                                   │
┌───────────┴─────────────┐                    │
│ DETERMINE LAST CHARACTER│                    │
│ BOUNDARY BEFORE FB      │                    │
│                    253  │                    │
└───────────┬─────────────┘                    │
            │                                   │
         ╱──┴──╲         NO   ┌──────────┐     │
   255  ╱   IS    ╲───────────▶│   NO     │     │
       ╱ FB FIRST   ╲         │  ACTION  │     │
      ╱ BYTE OF A     ╲        └──────────┘     │
      ╲ DOUBLE BYTE   ╱                         │
       ╲ CHARACTER   ╱                          │
        ╲    ?     ╱                            │
         ╲──┬──╱                                │
            │ Y                                 │
┌───────────┴─────────────┐                    │
│ REPLACE FB WITH SINGLE  │                    │
│ BYTE SPACE              │                    │
│                    257  │                    │
└───────────┬─────────────┘                    │
            │                                   │
      ╭─────┴─────╮                       ╭─────┴─────╮
      │    END    │                       │    END    │
      ╰───────────╯                       ╰───────────╯
```

**FIG. 16A**                              **FIG. 16B**

N = PARAMETER 2 OF SUBSTR ⟿ 263

↓

SB = START BYTE OF SUBSTRING ⟿ 265

↓

SB = ADDRESS OF PARAMETER 1
DATABASE DATA + N − 1 ⟿ 267

↓

DETERMINE LAST CHARACTER
BOUNDARY BEFORE SB ⟿ 269

↓

271 ⟿ IS
SB SECOND
BYTE OF A DOUBLE
BYTE CHAR-
ACTER
? —— N ——→ NO ACTION

↓ YES

REPLACE FIRST BYTE OF
SUBSTRING WITH SINGLE
BYTE SPACE ⟿ 273

**FIG. 17**

| SUBTYPE OF COLUMN | SQLDATA | SQLIND |
|---|---|---|
| NOT SPECIFIED | SBCS CODEPAGE | DBCS CODEPAGE |
| 39 ⟿ FOR MIXED | SBCS CODEPAGE | DBCS CODEPAGE |
| 37 ⟿ FOR SBCS | SBCS CODEPAGE | 0 |
| FOR BIT DATA | 0 | 0 |

**FIG. 18**